(19) **Europäisches Patentamt**
**European Patent Office**
**Office européen des brevets**

(11) **EP 3 594 272 A1**

(12) **EUROPÄISCHE PATENTANMELDUNG**

(43) Veröffentlichungstag:
**15.01.2020 Patentblatt 2020/03**

(21) Anmeldenummer: **18182721.3**

(22) Anmeldetag: **10.07.2018**

(51) Int Cl.:
**C08J 3/14** (2006.01)   **B29C 67/04** (2017.01)
**C08L 77/02** (2006.01)   **B29C 64/153** (2017.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **BASF SE**
**67056 Ludwigshafen am Rhein (DE)**

(72) Erfinder:
- **STAMMER, Achim**
  **67056 Ludwigshafen (DE)**
- **GRAMLICH, Simon**
  **67056 Ludwigshafen (DE)**
- **BAUDER, Andreas**
  **67056 Ludwigshafen (DE)**

(74) Vertreter: **Baier, Martin**
**Ellwanger & Baier**
**Patentanwälte Partnerschaftsgesellschaft**
**Friedrichsplatz 9**
**68165 Mannheim (DE)**

(54) **VERFAHREN ZUR KONTINUIERLICHEN HERSTELLUNG EINES POLYAMIDPULVERS**

(57) Die vorliegende Erfindung betrifft ein Verfahren zur kontinuierlichen Herstellung eines Polyamidpulvers (PP), das mindestens ein teilkristallines Polyamid (P) enthält. Darüber hinaus betrifft die vorliegende Erfindung das so erhältliche Polyamidpulver (PP) und die Verwendung des Polyamidpulvers (PP) als Sinterpulver (SP) sowie ein Verfahren zur Herstellung eines Formkörpers durch Belichten einer Schicht eines Polyamidpulvers (PP).

**Beschreibung**

Die vorliegende Erfindung betrifft ein Verfahren zur kontinuierlichen Herstellung eines Polyamidpulvers (PP), das mindestens ein teilkristallines Polyamid (P) enthält. Darüber hinaus betrifft die vorliegende Erfindung das so erhältliche Polyamidpulver (PP) und die Verwendung des Polyamidpulvers (PP) als Sinterpulver (SP) sowie ein Verfahren zur Herstellung eines Formkörpers durch Belichten einer Schicht eines Polyamidpulvers (PP).

Die schnelle Bereitstellung von Prototypen ist eine in der jüngsten Zeit häufig gestellte Aufgabe. Ein Verfahren, das für dieses sogenannte "rapid prototyping" besonders geeignet ist, ist das selektive Lasersintern (SLS). Dabei wird ein Kunststoffpulver in einer Kammer selektiv mit einem Laserstrahl belichtet. Das Pulver schmilzt auf, die geschmolzenen Partikel laufen ineinander und erstarren wieder. Wiederholtes Aufbringen von Kunststoffpulver und anschließendes Belichten mit einem Laser ermöglicht die Modellierung von dreidimensionalen Formkörpern.

Das Verfahren des selektiven Lasersinterns zur Herstellung von Formkörpern aus pulverförmigen Polymeren wird ausführlich in den Patentschriften US 6,136,948 und WO 96/06881 beschrieben.

Das selektive Lasersintern ist für die Herstellung einer größeren Anzahl an Formkörpern häufig zu zeitintensiv, so dass zur Herstellung von größeren Mengen an Formkörpern das High-Speed Sintern (HSS) oder die sogenannte Multijet Fusion Technologie (MJF) von HP eingesetzt werden kann. Beim High-Speed Sintern wird durch Aufsprühen einer infrarotabsorbierenden Tinte auf den zu versinternden Bauteilquerschnitt und anschließendes Belichten mit einem Infrarotstrahler eine höhere Verarbeitungsgeschwindigkeit, verglichen mit dem selektiven Lasersintern, erzielt.

Als Sinterpulver im selektiven Lasersintern (SLS), im High-Speed Sintern (HSS) oder bei der sogenannten Multijet Fusion Technologie (MJF) eignen sich insbesondere Polyamidpulver. Im Stand der Technik sind verschiedene Polyamidpulver, die als Sinterpulver eingesetzt werden können, sowie Verfahren zu deren Herstellung beschrieben. Beispielsweise werden die Polyamidpulver durch Vermahlen oder durch Fällung hergestellt.

Beim Vermahlen werden ein Polyamid sowie gegebenenfalls Zusatzstoffe und/oder Additive in eine Mühle gegeben und darin, vorzugsweise unter Kühlung mit flüssigem Stickstoff, unter Erhalt des Polyamidpulvers vermahlen (Kryogenes Vermahlen). Nachteilig bei diesem Verfahren ist jedoch, dass die Ausbeute an Polyamidpulver, das als Sinterpulver eingesetzt werden kann, häufig sehr gering ist, da die durch Vermahlen hergestellten Polyamidpulver häufig eine zu breite Partikelgrößenverteilung aufweisen.

Wird das Polyamidpulver durch Fällung hergestellt, so werden üblicherweise zunächst das Polyamid sowie gegebenenfalls Zusatzstoffe und/oder Additive mit einem Lösungsmittel gemischt und das Polyamid gegebenenfalls unter Erwärmen in dem Lösungsmittel unter Erhalt einer Polyamid-Lösung gelöst. Die Fällung des Polyamidpulvers erfolgt anschließend beispielsweise dadurch, dass die Polyamid-Lösung abgekühlt wird, das Lösungsmittel aus der Polyamid-Lösung abdestilliert wird oder ein Fällungsmittel zu der Polyamid-Lösung gegeben wird.

Die Herstellung des Polyamidpulvers durch Fällung erfolgt dabei üblicherweise in der sogenannten Batchfahrweise, das heißt, die unterschiedlichen Teilschritte der Fällung werden nacheinander in derselben Vorrichtung durchgeführt.

Nachteilig bei dieser Fahrweise ist allerdings, dass dabei, um eine große Menge an Polyamidpulver zu erhalten, eine Vorrichtung mit einem großen Volumen verwendet werden muss, wodurch die Durchmischung von Polyamid, Lösungsmittel sowie gegebenenfalls Zusatzstoffen und/oder Additiven häufig nicht ausreichend ist. Dies führt oftmals zu einer geringen Sphärizität sowie zu einer breiten Partikelgrößenverteilung des erhaltenen Polyamidpulvers. Des Weiteren ist die Temperatur-Kontrolle und -Regelung der einzelnen Teilschritte der Fällung in der Batchfahrweise häufig schwierig und träge.

Die der vorliegenden Erfindung zugrunde liegende Aufgabe besteht somit darin, ein Verfahren zur Herstellung eines Polyamidpulvers (PP) bereitzustellen, wobei das Polyamidpulver (PP) insbesondere geeignet sein sollte für den Einsatz als Sinterpulver (SP) in einem selektiven Lasersinterverfahren, im High-Speed Sintern (HSS) oder bei der sogenannten Multijet Fusion Technologie (MJF). Das Verfahren und das daraus erhältliche Polyamidpulver (PP) sollten die vorgenannten Nachteile der im Stand der Technik beschriebenen Verfahren und Sinterpulver nicht oder nur in vermindertem Maße aufweisen. Das Verfahren sollte zudem möglichst einfach und kostengünstig durchführbar sein.

Gelöst wird diese Aufgabe durch ein Verfahren zur kontinuierlichen Herstellung eines Polyamidpulvers (PP), das mindestens ein teilkristallines Polyamid (P) enthält, umfassend die Schritte

a) Herstellen einer Lösung (L), die das mindestens eine teilkristalline Polyamid (P) gelöst in einem Lösungsmittel (LM) enthält, wobei als Lösungsmittel (LM) eine Mischung verwendet wird, die im Bereich von 30 bis 60 Gew.-% Lactam und im Bereich von 40 bis 70 Gew.-% Wasser enthält, bezogen auf das Gesamtgewicht der Mischung, umfassend die Schritte

a1) Mischen einer Schmelze (S), die das mindestens eine teilkristalline Polyamid (P) in geschmolzener Form enthält, mit dem Lösungsmittel (LM) in einer Mischvorrichtung (MV) unter Erhalt einer Dispersion (D), die das mindestens eine teilkristalline Polyamid (P) dispergiert in dem Lösungsmittel (LM) enthält, wobei die Schmelze (S) und das Lösungsmittel (LM) der Mischvorrichtung (MV) kontinuierlich zugeführt werden,

a2) Kontinuierliche Überführung der in Schritt a1) erhaltenen Dispersion (D) aus der Mischvorrichtung (MV) in eine Verweilvorrichtung (VV), in der sich das mindestens eine dispergierte teilkristalline Polyamid (P) in dem Lösungsmittel (LM) löst unter Erhalt der Lösung (L),

wobei das Lösungsmittel (LM), die Dispersion (D) und die Lösung (L) in Schritt a2) bei einer ersten Temperatur (T1) gehalten werden,

b) Kontinuierliches Überführen der in Schritt a) erhaltenen Lösung (L) aus der Verweilvorrichtung (VV) in eine Fällvorrichtung (FV), wobei die in Schritt a) erhaltene Lösung (L) in der Fällvorrichtung (FV) auf eine zweite Temperatur (T2) abgekühlt wird unter Erhalt einer Suspension (S), die das Polyamidpulver (PP) als suspendierte Phase und das Lösungsmittel (LM) als kontinuierliche Phase enthält,

c) Abtrennen des Polyamidpulvers (PP) aus der in Schritt b) erhaltenen Suspension (S).

Es wurde überraschend gefunden, dass das durch das erfindungsgemäße Verfahren hergestellte Polyamidpulver (PP) eine hohe Sphärizität sowie eine besonders enge Partikelgrößenverteilung aufweist und sich zudem besonders gut für die Verwendung in einem selektiven Lasersinterverfahren, im High-Speed Sintern (HSS) oder bei der Multijet Fusion Technologie (MJF) eignet. Darüber hinaus lässt sich die Temperatur im erfindungsgemäßen Verfahren optimal kontrollieren und regeln, da das Lösen des mindestens einen teilkristallinen Polyamids (P) im Lösungsmittel (LM) (Schritt a)) sowie das Fällen des Polyamidpulvers (PP) aus der Lösung (L) (Schritt b)) in mindestens drei räumlich getrennten Vorrichtungen durchgeführt werden kann.

Zudem können im erfindungsgemäßen Verfahren Vorrichtungen eingesetzt werden, die ein kleineres Volumen aufweisen als die Vorrichtung in einem Verfahren, das in Batchfahrweise durchgeführt wird. Dadurch verkürzt sich die Zeit, die zum Lösen des mindestens einen teilkristallinen Polyamids (P) im Lösungsmittel (LM) beziehungsweise zur Fällung des Polyamidpulvers (PP) aus der Lösung (L) benötigt wird. Infolgedessen sind das mindestens eine teilkristalline Polyamid (P) beziehungsweise das Polyamidpulver (PP) einer geringeren thermischen Belastung ausgesetzt, so dass die aus dem Polyamidpulver (PP) hergestellten Formkörper gute mechanische Eigenschaften, insbesondere ein hohes Modul und gute Zugfestigkeiten besitzen.

Außerdem wird das durch das erfindungsgemäße Verfahren hergestellte Polyamidpulver (PP) in einer besonders hohen Ausbeute erhalten verglichen mit Polyamidpulvern, die durch Vermahlen hergestellt werden.

Nachfolgend wird die vorliegende Erfindung näher erläutert.

## Teilkristallines Polyamid (P)

Das im erfindungsgemäßen Verfahren hergestellte Polyamidpulver (PP) enthält mindestens ein teilkristallines Polyamid (P).

"Mindestens ein teilkristallines Polyamid (P)" bedeutete im Rahmen der vorliegenden Erfindung sowohl genau ein teilkristallines Polyamid (P) als auch eine Mischung (blend) aus zwei oder mehreren teilkristallinen Polyamiden (P).

"Teilkristallin" bedeutet im Rahmen der vorliegenden Erfindung, dass das Polyamid eine Schmelzenthalpie $\Delta H2_{(A)}$ von > 45 J/g, bevorzugt von > 50 J/g und insbesondere bevorzugt von > 55 J/g aufweist, jeweils gemessen mittels dynamischer Differenzkalorimetrie (differential scanning calorimetry, DSC) gemäß ISO 11357-4: 2014, bei einer Heizrate von 20 K/min.

Das mindestens eine teilkristalline Polyamid (P) weist außerdem bevorzugt eine Schmelzenthalpie $\Delta H2_{(A)}$ < 200 J/g, besonders bevorzugt von < 175 J/g und insbesondere bevorzugt von < 150 J/g auf, jeweils gemessen mittels dynamischer Differenzkalorimetrie (differential scanning calorimetry, DSC) gemäß ISO 11357-4: 2014, bei einer Kühlrate von 20 K/min.

Als mindestens ein teilkristallines Polyamid (P) sind beispielsweise Polyamide geeignet, die sich von Lactamen mit 7 bis 13 Ringgliedern ableiten. Als mindestens ein teilkristallines Polyamid (P) sind weiterhin Polyamide geeignet, die durch Umsetzung von Dicarbonsäuren mit Diaminen erhalten werden.

Als Polyamide, die sich von Lactamen ableiten, seien beispielhaft Polyamide erwähnt, die sich von Caprolactam, Capryllactam und/oder Laurinlactam ableiten.

Weiterhin geeignete Polyamide sind erhältlich aus ω-Aminoalkylnitrilen. Bevorzugtes ω-Aminoalkylnitril ist Aminocapronitril, das zu Polyamid 6 führt. Weiterhin können Dinitrile mit Diaminen umgesetzt werden. Hierbei sind Adipodinitril und Hexamethylendiamin bevorzugt, deren Polymerisation zu Polyamid 66 führt. Die Polymerisation von Nitrilen erfolgt bevorzugt in Gegenwart von Wasser und wird auch als Direktpolymerisation bezeichnet.

Für den Fall, dass als das mindestens eine teilkristalline Polyamid (P) Polyamide eingesetzt werden, die aus Dicarbonsäuren und Diaminen erhältlich sind, können Dicarbonsäurealkane (aliphatische Dicarbonsäuren) mit 6 bis 36 Kohlenstoffatomen, bevorzugt mit 6 bis 12 Kohlenstoffatomen und besonders bevorzugt mit 6 bis 10 Kohlenstoffatomen eingesetzt werden. Darüber hinaus sind aromatische Dicarbonsäuren geeignet.

Beispielhaft seien hier Adipinsäure, Azelainsäure, Sebacinsäure, Dodecandisäure sowie Terephthalsäure und/oder Isophthalsäure als Dicarbonsäuren genannt.

Als Diamine eignen sich beispielsweise Alkandiamine mit 4 bis 36 Kohlenstoffatomen, bevorzugt Alkandiamine mit 6 bis 12 Kohlenstoffatomen, insbesondere Alkandiamine mit 6 bis 8 Kohlenstoffatomen sowie aromatische Diamine, wie beispielsweise m-Xylylendiamin, Di-(4-aminophenyl)methan, Di-(4-aminocyclohexyl)methan, 2,2-Di-(4-aminophenyl)-propan und 2,2-Di-(4-aminocyclohexyl)-propan sowie 1,5-Diamino-2-methyl-pentan.

Bevorzugt als das mindestens eine teilkristalline Polyamid (P) sind Polyhexamethylenadipinsäureamid, Polyhexamethylensebacinsäureamid und Polycaprolactam sowie Copolyamid 6/66, insbesondere mit einem Anteil von 5 bis 95 Gew.-% an Caprolactameinheiten.

Weiterhin sind Polyamide geeignet, die durch Copolymerisation zweier oder mehrerer der vorstehend und nachstehend genannten Monomere erhältlich sind, oder Mischungen mehrerer Polyamide, wobei das Mischungsverhältnis beliebig ist.

Geeignete Polyamide sind somit aliphatische, teilaromatische oder aromatische Polyamide. Der Begriff "aliphatische Polyamide" bedeutet, dass die Polyamide ausschließlich aus aliphatischen Monomeren aufgebaut sind. Der Begriff "teilaromatische Polyamide" bedeutet, dass die Polyamide sowohl aus aliphatischen als auch aus aromatischen Monomeren aufgebaut sind. Der Begriff "aromatische Polyamide" bedeutet, dass die Polyamide ausschließlich aus aromatischen Monomeren aufgebaut sind.

Die nachfolgende, nicht abschließende Aufstellung enthält bevorzugte teilkristalline Polyamide für den Einsatz als das mindestens eine teilkristalline Polyamid (P) im erfindungsgemäßen Verfahren.

AB-Polymere:

| PA 4 | Pyrrolidon |
| PA 6 | ε-Caprolactam |
| PA 7 | Enantholactam |
| PA 8 | Capryllactam |

AA/BB-Polymere:

| PA 46 | Tetramethylendiamin, Adipinsäure |
| PA 66 | Hexamethylendiamin, Adipinsäure |
| PA 69 | Hexamethlyendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |

| PA 6T | Hexamethylendiamin, Terephthalsäure |
| PA MXD6 | m-Xylyendiamin, Adipinsäure |

| PA 6/6I | (siehe PA 6), Hexamethylendiamin, Isophthalsäure |
| PA 6/6T | (siehe PA 6 und PA 6T) |
| PA 6/66 | (siehe PA 6 und PA 66) |
| PA 6/12 | (siehe PA 6), Lauryllactam |
| PA 66/6/610 | (siehe PA 66, PA 6 und PA 610) |
| PA 6I/6T/PACM | wie PA 6I/6T und Diaminodicyclohexylmethan |
| PA 6/6I6T | (siehe PA 6 und PA 6T), Hexamethylendiamin, Isophthalsäure |

Bevorzugt ist das mindestens eine teilkristalline Polyamid (P) ausgewählt aus der Gruppe bestehend aus PA 4, PA 6, PA 7, PA 8, PA 9, PA 11, PA 12, PA 46, PA 66, PA 69, PA 610, PA 612, PA 613, PA 1212, PA 1313, PA 6T, PA MXD6, PA 6/6T, PA 6/6I, PA 6/6I6T, PA 6.36, PA 6/66, PA 6/12, PA 66/6/610, PA PACM12, PA 6I/6T/PACM und Copolyamiden aus zwei oder mehreren der vorstehend genannten Polyamide.

Besonders bevorzugt ist das mindestens eine teilkristalline Polyamid (P) ausgewählt aus der Gruppe bestehend aus PA 6, PA 66, PA 610, PA 612, PA 6.36, PA 6/66, PA 6/6I6T, PA 6/6T und PA 6/6I.

Insbesondere bevorzugt ist das mindestens eine teilkristalline Polyamid (P) ausgewählt aus der Gruppe bestehend aus PA 6, PA 66, PA 610, PA 6/66 und PA 6/6T.

Gegenstand der vorliegenden Erfindung ist daher auch ein Verfahren, bei dem das mindestens eine teilkristalline Polyamid (P) ausgewählt ist aus der Gruppe bestehend aus PA 4, PA 6, PA 7, PA 8, PA 9, PA 11, PA 12, PA 46, PA 66, PA 69, PA 610, PA 612, PA 613, PA 1212, PA 1313, PA 6T, PA MXD6, PA 6/6T, PA 6/6I, PA 6/6I6T, PA 6.36, PA 6/66, PA 6/12, PA 66/6/610, PA PACM 12, PA 6I/6T/PACM und Copolyamiden aus zwei oder mehreren der vorstehend genannten Polyamide.

Beispielsweise weist das mindestens eine teilkristalline Polyamid (P) eine Viskositätszahl ($VZ_{(P)}$) im Bereich von 70 bis 350 ml/g, vorzugsweise von 70 bis 240 ml/g auf. Die Bestimmung der Viskositätszahl ($VZ_{(P)}$) des mindestens einen teilkristallinen Polyamids (P) erfolgt erfindungsgemäß in einer 0,5 Gew.-%-igen Lösung des mindestens einen teilkristallinen Polyamids (P) und in 96 Gew.-%-iger Schwefelsäure bei 25° C gemäß ISO 307:2013-08.

Das mindestens eine teilkristalline Polyamid (P) weist vorzugsweise ein gewichtsmittleres Molekulargewicht ($M_W$) im Bereich von 500 bis 2.000.000 g/Mol, besonders bevorzugt im Bereich von 5.000 bis 500.000 g/Mol und insbesondere bevorzugt im Bereich von 10.000 bis 100.000 g/Mol auf. Das gewichtsmittlere Molekulargewicht ($M_W$) wird bestimmt gemäß ASTM-D 4001.

Das mindestens eine teilkristalline Polyamid (P) weist üblicherweise eine Schmelztemperatur ($T_{M(P)}$) auf.

Die Schmelztemperatur ($T_{M(P)}$) des mindestens einen teilkristallinen Polyamids (P) liegt beispielsweise im Bereich von 70 bis 300° C, bevorzugt im Bereich von 180 bis 295° C.

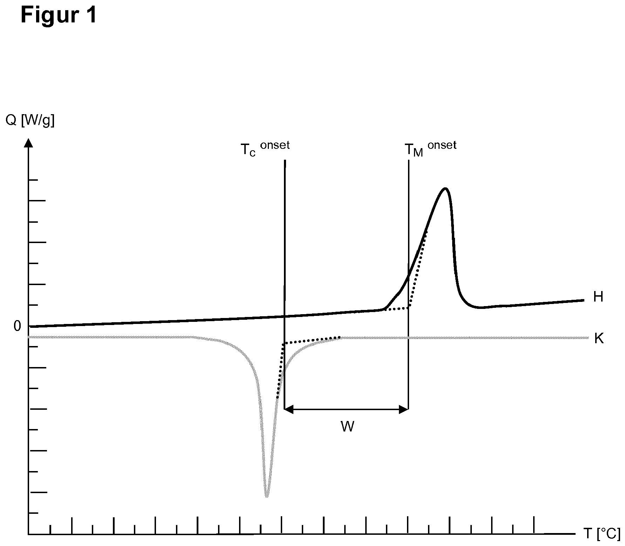

Die Schmelztemperatur ($T_{M(P)}$) des mindestens einen teilkristallinen Polyamids (P) wird mittels dynamischer Differenzkalorimetrie bestimmt. Zur Bestimmung der Schmelztemperatur ($T_{M(P)}$) mittels dynamischer Differenzkalorimetrie (DDK; Differential Scanning Calorimetry, DSC) werden üblicherweise ein Heizlauf (H) und ein Kühllauf (K) gemessen. Dabei wird ein DSC-Diagramm, wie es in Figur 1 beispielhaft gezeigt ist, erhalten. Unter der Schmelztemperatur ($T_{M(P)}$) wird dann die Temperatur verstanden, bei der der Aufschmelzpeak des Heizlaufs (H) des DSC-Diagramms ein Maximum aufweist. Die Schmelztemperatur ($T_{M(P)}$) ist also von der weiter unten beschriebenen Onset-Temperatur des Aufschmelzens ($T_M^{onset}$) verschieden. Üblicherweise liegt die Schmelztemperatur ($T_{M(P)}$) oberhalb der Onset-Temperatur des Aufschmelzens ($T_M^{onset}$).

Das mindestens eine teilkristalline Polyamid (P) weist außerdem üblicherweise eine Glasübergangstemperatur ($T_{G(P)}$) auf. Die Glasübergangstemperatur ($T_{G(P)}$) des mindestens einen teilkristallinen Polyamids (P) liegt beispielsweise im Bereich von 0 bis 110° C und bevorzugt im Bereich von 40 bis 105° C, gemessen im trockenen Zustand.

"Im trockenen Zustand bedeutet im Rahmen der vorliegenden Erfindung, dass das mindestens eine teilkristalline Polyamid (P) weniger als 3 Gew.-%, bevorzugt weniger als 1 Gew.-% und insbesondere bevorzugt weniger als 0,5 Gew.-% Lösungsmittel (LM), bevorzugt Wasser, enthält, jeweils bezogen auf das Gesamtgewicht des mindestens einen teilkristallinen Polyamids (P).

Für das Lösungsmittel (LM) gelten die nachfolgenden Ausführungen und Bevorzugungen zu dem in Schritt a) eingesetzten Lösungsmittel (LM) entsprechend.

Die Glasübergangstemperatur ($T_{G(P)}$) des mindestens einen teilkristallinen Polyamids (P) wird mittels dynamischer Differenzkalorimetrie bestimmt. Zur Bestimmung werden erfindungsgemäß zunächst ein erster Heizlauf (H1), dann ein Kühllauf (K) und anschließend ein zweiter Heizlauf (H2) einer Probe des mindestens einen teilkristallinen Polyamids (P) (Einwaage ca. 8,5 g) gemessen. Die Heizrate beim ersten Heizlauf (H1) und beim zweiten Heizlauf (H2) beträgt 20 K/min. Die Kühlrate beim Kühllauf (K) beträgt ebenfalls 20 K/min. Im Bereich des Glasübergangs des mindestens einen teilkristallinen Polyamids (P) wird im zweiten Heizlauf (H2) des DSC-Diagramms eine Stufe erhalten. Die Glasübergangstemperatur ($T_{G(P)}$) des mindestens einen teilkristallinen Polyamids (P) entspricht der Temperatur bei halber Stufenhöhe im DSC-Diagramm. Dieses Verfahren zur Bestimmung der Glasübergangstemperatur ($T_G$) ist dem Fachmann bekannt.

Das teilkristalline Polyamid (P) weist außerdem üblicherweise eine Kristallisationstemperatur ($T_{C(P)}$) im Bereich von 130 bis 250 °C auf. Bevorzugt liegt die Kristallisationstemperatur ($T_{C(P)}$) des teilkristallinen Polyamids (P) im Bereich von 145 bis 245 °C und insbesondere bevorzugt im Bereich von 160 bis 235 °C.

Die Kristallisationstemperatur ($T_{C(P)}$) wird im Rahmen der vorliegenden Erfindung ebenfalls mittels dynamischer Differenzkalorimetrie (DDK; Differential Scanning Calorimetry, DSC) bestimmt. Dabei werden, wie vorstehend beschrieben, üblicherweise ein Heizlauf (H) und ein Kühllauf (K) gemessen. Es wird ein DSC-Diagramm, wie es in Figur 1 beispielhaft für das Polyamidpulver gezeigt ist, erhalten. Die Kristallisationstemperatur ($T_{C(P)}$) ist dann die Temperatur am Minimum des Kristallisationspeaks der DSC-Kurve. Die Kristallisationstemperatur ($T_{C(PP)}$) ist also von der weiter unten beschriebenen Onset-Temperatur der Kristallisation ($T_C^{onset}$) verschieden. Die Kristallisationstemperatur ($T_{C(P)}$) liegt üblicherweise unterhalb der Onset-Temperatur der Kristallisation ($T_C^{onset}$).

Schritt a)

In Schritt a) wird eine Lösung (L) hergestellt, die das mindestens eine teilkristalline Polyamid (P) gelöst in einem Lösungsmittel (LM) enthält, wobei als Lösungsmittel (LM) eine Mischung verwendet wird, die im Bereich von 30 bis 60 Gew.-% Lactam und im Bereich von 40 bis 70 Gew.-% Wasser enthält, bezogen auf das Gesamtgewicht der Mischung.

Unter "Lactam" werden erfindungsgemäß zyklische Amide verstanden, die im Ring 4 bis 12 bis Kohlenstoffatome, bevorzugt 6 bis 12 Kohlenstoffatome, aufweisen.

Geeignete Lactame sind beispielsweise ausgewählt aus der Gruppe bestehend aus 4-Aminobutansäurelactam (γ-Lactam; γ-Butyrolactam; Pyrrolidon), 5-Aminopentansäurelactam (δ-Lactam; δ-Valerolactam; Piperidon), 6-Aminohexansäurelactam (ε-Lactam; ε-Caprolactam), 7-Aminoheptansäurelactam (ζ-Lactam; ζ-Heptanolactam), 8-Aminooctansäurelactam (η-Lactam; η-Octanolactam; Capryllactam), 9-Nonansäurelactam (θ-Lactam; θ-Nonanolactam), 10-Decansäurelactam (ω-Decanolactam; Caprinlactam), 11-Undecansäurelactam (ω-Undecanolactam) und 12-Dodecansäurelactam (ω-Dodecanolactam; Laurolactam).

Die Lactame können unsubstituiert oder zumindest monosubstituiert sein. Für den Fall, dass zumindest monosubstituierte Lactame eingesetzt werden, können diese an den Kohlenstoffatomen des Rings einen, zwei oder mehrere Substituenten tragen.

Bevorzugt sind Lactame unsubstituiert.

Besonders bevorzugt ist 12-Dodecansäurelactam (ω-Dodecanolactam) und/oder ε-Lactam (ε-Caprolactam) und am meisten bevorzugt ist ε-Lactam (ε-Caprolactam).

ε-Caprolactam ist das zyklische Amid der Capronsäure. Es wird auch als 6-Aminohexansäurelactam, 6-Hexanlactam oder Caprolactam bezeichnet. Sein IUPAC-Name lautet "Acepan-2-one". Caprolactam besitzt die CAS-Nummer 105-60-2 und die allgemeine Formel $C_6H_{11}NO$. Verfahren zur Herstellung von Caprolactam sind dem Fachmann bekannt.

Im Rahmen der vorliegenden Erfindung wird als Lösungsmittel (LM) eine Mischung verwendet, die im Bereich von 30 bis 60 Gew.-% Lactam und im Bereich von 40 bis 70 Gew.-% Wasser enthält, bezogen auf das Gesamtgewicht der Mischung.

Vorzugsweise wird als Lösungsmittel (LM) eine Mischung verwendet, die im Bereich von 30 bis 50 Gew.-% Lactam und im Bereich von 50 bis 70 Gew.-% Wasser, mehr bevorzugt im Bereich von 35 bis 45 Gew.-% Lactam und im Bereich von 55 bis 65 Gew.-% Wasser, enthält, bezogen auf das Gesamtgewicht der Mischung.

In einer weiteren bevorzugten Ausführungsform besteht das Lösungsmittel (LM) aus einer Mischung aus im Bereich von 30 bis 60 Gew.-% Lactam und im Bereich von 40 bis 70 Gew.-% Wasser, bezogen auf das Gesamtgewicht der Mischung.

Die Herstellung der Lösung (L) umfasst die Schritte

a1) Mischen einer Schmelze (S), die das mindestens eine teilkristalline Polyamid (P) in geschmolzener Form enthält, mit dem Lösungsmittel (LM) in einer Mischvorrichtung (MV) unter Erhalt einer Dispersion (D), die das mindestens eine teilkristalline Polyamid (P) dispergiert in dem Lösungsmittel (LM) enthält, wobei die Schmelze (S) und das Lösungsmittel (LM) der Mischvorrichtung (MV) kontinuierlich zugeführt werden,

a2) Kontinuierliche Überführung der in Schritt a1) erhaltenen Dispersion (D) aus der Mischvorrichtung (MV) in eine Verweilvorrichtung (VV), in der sich das mindestens eine dispergierte teilkristalline Polyamid (P) in dem Lösungsmittel (LM) löst unter Erhalt der Lösung (L),

wobei das Lösungsmittel (LM), die Dispersion (D) und die Lösung (L) in Schritt a2) bei einer ersten Temperatur (T1) gehalten werden.

Schritt a1)

In Schritt a1) wird eine Schmelze (S), die das mindestens eine teilkristalline Polyamid (P) in geschmolzener Form enthält, mit dem Lösungsmittel (LM) in einer Mischvorrichtung (MV) unter Erhalt einer Dispersion (D) gemischt.

Das Mischen kann nach allen dem Fachmann bekannten Methoden erfolgen. Als Mischvorrichtung (MV) können prinzipiell alle dem Fachmann bekannten Mischvorrichtungen verwendet werden. Im Rahmen der vorliegenden Erfindung wird vorzugsweise eine dynamische Mischvorrichtung verwendet. Beispiele für dynamische Mischvorrichtungen sind Rotor-Stator- und Rotor-Rotor-Dispergiermaschinen wie Zahnkranzdispergiermaschinen und Kolloidmühlen, dynamische Durchlaufmischer, Inline-Mischer oder Mischpumpen.

Vorzugsweise werden die Schmelze (S), das Lösungsmittel (LM) und die erhaltene Dispersion (D) in Schritt a1) gerührt.

In Schritt a1) wird eine Dispersion (D) erhalten. Die Dispersion (D) enthält das mindestens eine teilkristalline Polyamid (P) dispergiert in dem Lösungsmittel (LM). Die Dispersion (D) enthält damit das Lösungsmittel (LM) als Dispersionsmedium (äußere Phase) und das mindestens eine Polyamid (P) als disperse Phase (innere Phase).

Beispielsweise enthält die Dispersion (D) im Bereich von 1 bis 25 Gew.-% des mindestens einen teilkristallinen Polyamids (P) und im Bereich von 75 bis 99 Gew.-% des Lösungsmittels (LM), bezogen auf das Gesamtgewicht der Dispersion (D).

Bevorzugt enthält die Dispersion (D) im Bereich von 4 bis 20 Gew.-% des mindestens einen teilkristallinen Polyamids (P) und im Bereich von 80 bis 96 Gew.-% des Lösungsmittels (LM), bezogen auf das Gesamtgewicht der Dispersion (D).

Am meisten bevorzugt enthält die Dispersion (D) im Bereich von 7 bis 15 Gew.-% des mindestens einen teilkristallinen Polyamids (P) und im Bereich von 85 bis 93 Gew.-% des Lösungsmittels (LM), bezogen auf das Gesamtgewicht der Dispersion (D).

Gegenstand der vorliegenden Erfindung ist daher auch ein Verfahren, bei dem die in Schritt a1) erhaltene Dispersion (D) im Bereich von 1 bis 25 Gew. % des mindestens einen teilkristallinen Polyamids (P) und im Bereich von 75 bis 99 Gew.-% des Lösungsmittels (LM) enthält, bezogen auf das Gesamtgewicht der Dispersion (D).

Die Schmelze (S), die das mindestens eine teilkristalline Polyamid (P) in geschmolzener Form enthält, und das Lösungsmittel (LM) werden der Mischvorrichtung (MV) kontinuierlich zugeführt.

Unter einer "kontinuierlichen Zuführung" der Schmelze (S) beziehungsweise des Lösungsmittels (LM) wird im Rahmen der vorliegenden Erfindung verstanden, dass die entsprechende Zuführung über die gesamte Dauer von Schritt a1) erfolgt.

Die Zuführung der Schmelze (S) und des Lösungsmittels (LM) können nach allen dem Fachmann bekannten Methoden erfolgen. Beispielsweise werden die Schmelze (S) und das Lösungsmittel (LM) unter Verwendung von Pumpen jeweils aus separaten Vorrichtungen ($V_S$) und ($V_{LM}$) der Mischvorrichtung (MV) zugeführt.

Dabei können die Schmelze (S) und das Lösungsmittel (LM) gleichzeitig aus den jeweiligen separaten Vorrichtungen ($V_S$) und ($V_{LM}$) der Mischvorrichtung (MV) zugeführt werden. Es ist jedoch auch möglich, dass zuerst das Lösungsmittel (LM) aus der Vorrichtung ($V_{LM}$) und dann die Schmelze (S) aus der Vorrichtung ($V_S$) der Mischvorrichtung (MV) zugeführt werden. Vorzugsweise wird zuerst das Lösungsmittel (LM) aus der Vorrichtung ($V_{LM}$) und dann die Schmelze (S) aus der Vorrichtung ($V_S$) der Mischvorrichtung (MV) zugeführt.

Bei der Vorrichtung ($V_{LM}$), die das Lösungsmittel (LM) enthält, handelt es sich beispielsweise um einen Vorlagebehälter.

Bei der Vorrichtung ($V_S$), die die Schmelze (S) enthält, handelt es sich vorzugsweise um einen Extruder. Als Extruder eignen sich alle dem Fachmann bekannten Extruder.

Vorzugsweise wird das Lösungsmittel (LM), bevor es der Mischvorrichtung (MV) zugeführt wird, auf eine Temperatur im Bereich von 140 bis 220 °C, mehr bevorzugt im Bereich von 160 bis 200 °C, erwärmt.

Das Erwärmen des Lösungsmittels (LM) kann dabei nach allen dem Fachmann bekannten Methoden erfolgen. Beispielsweise wird das Lösungsmittel (LM) mit Hilfe einer Pumpe aus dem Vorlagebehälter über einen Wärmetauscher in die Mischvorrichtung (MV) gepumpt.

Die Schmelze (S) enthält das mindestens eine teilkristalline Polyamid (P) in geschmolzener Form.

"In geschmolzener Form" bedeutet, dass das mindestens eine teilkristalline Polyamid (P) eine Temperatur aufweist, die oberhalb der Schmelztemperatur ($T_{M(P)}$) des mindestens einen teilkristallinen Polyamids (P) liegt. "In geschmolzener Form" bedeutet also im Rahmen der vorliegenden Erfindung, dass das mindestens eine teilkristalline Polyamid (P), bevor es der Mischvorrichtung (MV) zugeführt wird, in der Vorrichtung ($V_S$) auf eine Temperatur erwärmt wird, die oberhalb der Schmelztemperatur ($T_{M(P)}$) des mindestens einen teilkristallinen Polyamids (P) liegt. Liegt das mindestens eine teilkristalline Polyamid (P) in geschmolzener Form vor, so ist das mindestens eine teilkristalline Polyamid (P) fließfähig.

"Fließfähig" bedeutet, dass das mindestens eine teilkristalline Polyamid (P) in der Vorrichtung ($V_S$) gefördert werden kann und dass das mindestens eine teilkristalline Polyamid (P) aus der Vorrichtung ($V_S$) extrudiert und in die Mischvorrichtung (MV) gefördert werden kann.

Es ist für den Fachmann klar, dass, wenn das mindestens eine teilkristalline Polyamid (P) eine Temperatur aufweist, die oberhalb der Schmelztemperatur ($T_{M(P)}$) des mindestens einen teilkristallinen Polyamids (P) liegt, auch die Schmelze (S) eine Temperatur aufweist, die oberhalb der Schmelztemperatur ($T_{M(P)}$) des mindestens einen teilkristallinen Polyamids (P) liegt.

Die Schmelze (S) weist vorzugsweise eine Temperatur (T3) im Bereich von 200 bis 320 °C, mehr bevorzugt im Bereich von 200 bis 290 °C und insbesondere bevorzugt im Bereich von 200 bis 250 °C, auf.

Gegenstand der vorliegenden Erfindung ist daher auch ein Verfahren, bei dem die Schmelze (S) eine Temperatur (T3) im Bereich von 200 bis 250 °C aufweist.

Die Schmelze (S) kann neben dem mindestens einen teilkristallinen Polyamid (P) in geschmolzener Form gegebenenfalls auch mindestens ein Additiv (A) enthalten.

"Mindestens ein Additiv (A)" bedeutet im Rahmen der vorliegenden Erfindung sowohl genau ein Additiv als auch eine Mischung aus zwei oder mehreren Additiven.

Additive als solche sind dem Fachmann bekannt. Beispielsweise ist das mindestens eine Additiv ausgewählt aus der Gruppe bestehend aus Antinukleierungsmitteln, Stabilisatoren, Endgruppenfunktionalisierern, Farbstoffen und Farbpigmenten.

Ein geeignetes Antinukleierungsmittel ist beispielsweise Lithiumchlorid. Geeignete Stabilisatoren sind beispielsweise Phenole, Phosphite und Kupferstabilisatoren. Geeignete Endgruppenfunktionalisierer sind beispielsweise Terephthalsäure, Adipinsäure und Propionsäure. Geeignete Farbstoffe und Farbpigmente sind beispielsweise Ruß und Eisenchromoxide.

Enthält die Schmelze (S) zusätzlich mindestens ein Additiv (A), kann das mindestens eine Additiv (A) ebenfalls in der Schmelze (S) in geschmolzener Form vorliegen. Ebenso ist es möglich, dass das mindestens eine Additiv (A) in der Schmelze (S) in fester Form vorliegt.

"In geschmolzener Form" bedeutet dann, dass das mindestens eine Additiv (A) eine Temperatur aufweist, die oberhalb der Schmelztemperatur ($T_{M(A)}$) des mindestens einen Additivs (A) liegt. "In geschmolzener Form" bedeutet dann also auch, dass die Schmelze (S) eine Temperatur aufweist, die oberhalb der Schmelztemperatur ($T_{M(P)}$) des mindestens einen Additivs (A) liegt.

"In fester Form" bedeutet dann, dass das mindestens eine Additiv (A) eine Temperatur aufweist, die unterhalb der Schmelztemperatur ($T_{M(A)}$) des mindestens einen Additivs (A) liegt. "In fester Form" bedeutet dann also auch, dass die Schmelze (S) eine Temperatur aufweist, die unterhalb der Schmelztemperatur ($T_{M(A)}$) des mindestens einen Additivs (A) liegt.

Im Rahmen der vorliegenden Erfindung enthält die "Schmelze (S)" somit immer das mindestens eine teilkristalline Polyamid (P) in geschmolzener Form. Das mindestens eine Additiv (A) kann hingegen auch in fester Form in der Schmelze (S) vorliegen.

Das mindestens eine teilkristalline Polyamid (P) und gegebenenfalls das mindestens eine Additiv (A) können der Vorrichtung ($V_S$) nach allen dem Fachmann bekannten Methoden zugeführt werden. Beispielsweise kann das mindestens eine teilkristalline Polyamid (P) der Vorrichtung ($V_S$) in geschmolzener oder in fester Form zugeführt werden. Ebenso kann gegebenenfalls das mindestens eine Additiv (A) der Vorrichtung ($V_S$) in geschmolzener oder in fester Form zugeführt werden.

Wird das mindestens eine teilkristalline Polyamid (P) der Vorrichtung ($V_S$) in fester Form zugeführt, so kann es der Vorrichtung ($V_S$) beispielsweise als Granulat und/oder als Pulver zugeführt werden. Das mindestens eine teilkristalline Polyamid (P) kann dann in der Vorrichtung ($V_S$) aufgeschmolzen werden. Diese Ausführungsform ist bevorzugt.

Entsprechend kann auch gegebenenfalls das mindestens eine Additiv (A) der Vorrichtung ($V_S$) in fester Form zugeführt werden, beispielsweise als Granulat oder als Pulver, bevorzugt als Pulver und dann gegebenenfalls in der Vorrichtung ($V_S$) aufgeschmolzen werden.

Darüber hinaus ist es möglich, dass zunächst das mindestens eine teilkristalline Polyamid (P) direkt in der Vorrichtung ($V_S$) hergestellt wird und dann gegebenenfalls das mindestens eine Additiv (A) der Vorrichtung ($V_S$) zugeführt wird.

Das mindestens eine teilkristalline Polyamid (P) und das gegebenenfalls mindestens eine Additiv (A) werden in der Vorrichtung ($V_S$) vorzugsweise compoundiert unter Erhalt einer compoundierten Mischung (cM).

Unter "compoundieren" wird im Rahmen der vorliegenden Erfindung das Vermischen des mindestens einen teilkristallinen Polyamids (P) und gegebenenfalls des mindestens einen Additivs (A) verstanden.

Üblicherweise werden das mindestens eine teilkristalline Polyamid (P) und das gegebenenfalls mindestens eine Additiv (A) in den Mengen miteinander compoundiert wie sie in der compoundierten Mischung (cM) und in der Schmelze (S) enthalten sein sollen.

Falls die compoundierte Mischung (cM) mindestens ein Additiv (A) enthält, so werden üblicherweise im Bereich von 90 bis 99,95 Gew.-% des mindestens einen teilkristallinen Polyamids (P) und im Bereich von 0,05 bis 10 Gew.-% des mindestens einen Additivs (A) compoundiert, jeweils bezogen auf das Gesamtgewicht des mindestens einen teilkristallinen Polyamids (P) und des mindestens einen Additivs (A).

Bevorzugt werden im Bereich von 95 bis 99,95 Gew.-% des mindestens einen teilkristallinen Polyamids (P) und im Bereich von 0,05 bis 5 Gew.-% des mindestens einen Additivs (A) compoundiert, jeweils bezogen auf das Gesamtgewicht des mindestens einen teilkristallinen Polyamids (P) und des mindestens einen Additivs (A).

Besonders bevorzugt werden im Bereich von 98 bis 99,95 Gew.-% des mindestens einen teilkristallinen Polyamids (P) und im Bereich von 0,05 bis 2 Gew.-% des mindestens einen Additivs (A) compoundiert, jeweils bezogen auf das Gesamtgewicht des mindestens einen teilkristallinen Polyamids (P) und des mindestens einen Additivs (A).

In einer weiteren Ausführungsform der vorliegenden Erfindung werden im Bereich von 60 bis < 95 Gew.-% des mindestens einen teilkristallinen Polyamids (P) und im Bereich von > 5 bis 40 Gew.-% des mindestens einen Additivs (A) compoundiert, jeweils bezogen auf das Gesamtgewicht des mindestens einen teilkristallinen Polyamids (P) und des mindestens einen Additivs (A).

Die Summe der Gewichtsprozente des mindestens einen teilkristallinen Polyamids (P) und des mindestens einen Additivs (A) ergibt üblicherweise 100 Gew.-%.

Das mindestens eine teilkristalline Polyamid (P) und das gegebenenfalls mindestens eine Additiv (A) können während des Compoundierens miteinander reagieren. Bevorzugt reagieren das mindestens eine teilkristalline Polyamid (P) und das gegebenenfalls mindestens eine Additiv (A) während des Compoundierens nicht miteinander.

Es versteht sich von selbst, dass sich die Gewichtsprozente des mindestens einen teilkristallinen Polyamids (P) und gegebenenfalls des mindestens einen Additivs (A) auf die Gewichtsprozente beziehen, bevor das mindestens eine teilkristalline Polyamid (P) und das mindestens eine Additiv (A) gegebenenfalls miteinander reagiert haben.

Zusätzlich kann ein Zusatzstoff mit dem mindestens einen teilkristallinen Polyamid (P) und gegebenenfalls dem mindestens einen Additiv (A) compoundiert werden. Geeignete Zusatzstoffe sind dem Fachmann bekannt und beispielsweise Talkum, Erdalkalisilikate, Erdalkaliglycerophosphate, Füllstoffe, wie Glaskugeln, Glasfasern, Kohlefasern, Nanotubes und Kreide, sowie schlagzähmodifizierte Polymere, beispielsweise auf Basis von Ethylen-Propylen (EPM) oder Ethylen-Propylen-Dien (EPDM), Kautschuken oder thermoplastischen Polyurethanen, Flammschutzmittel, Weichmacher und/oder Haftvermittler.

Beispielsweise können im Bereich von 0,1 bis 50 Gew.-% eines Zusatzstoffs, bevorzugt im Bereich von 0,1 bis 40 Gew.-% und insbesondere bevorzugt im Bereich von 0,1 bis 20 Gew.-% eines Zusatzstoffs zusätzlich compoundiert werden, jeweils bezogen auf das Gesamtgewicht des mindestens einen teilkristallinen Polyamids (P), des gegebenenfalls mindestens einen Additivs (A) und des Zusatzstoffs.

Es versteht sich von selbst, dass, wenn zusätzlich ein Zusatzstoff compoundiert wird, sich dann auch die Gewichtsprozente des mindestens einen teilkristallinen Polyamids (P) und des gegebenenfalls mindestens einen Additivs (A) auf das Gesamtgewicht des mindestens einen teilkristallinen Polyamids (P), des gegebenenfalls mindestens einen Additivs (A) und des Zusatzstoffs beziehen.

Die Summe der Gewichtsprozente des mindestens einen teilkristallinen Polyamids (P), des gegebenenfalls mindestens einen Additivs (A) und des Zusatzstoffs ergibt dann üblicherweise 100 Gew.-%.

Falls die compoundierte Mischung (cM) mindestens ein Additiv (A) enthält, enthält die compoundierte Mischung das mindestens eine Additiv (A) üblicherweise dispergiert in dem mindestens einen teilkristallinen Polyamid (P).

Das mindestens eine Additiv (A) bildet dann die disperse Phase (innere Phase), das mindestens eine teilkristalline Polyamid (P) bildet das Dispersionsmedium (kontinuierliche Phase). Die Schmelze (S) enthält das mindestens eine teilkristalline Polyamid (P) und gegebenenfalls das mindestens eine Additiv (A) üblicherweise in denselben Mengen, in denen das mindestens eine teilkristalline Polyamid (P) und das gegebenenfalls mindestens eine Additiv (A) miteinander compoundiert worden sind.

Daher enthält die Schmelze (S), falls sie mindestens ein Additiv (A) enthält, üblicherweise im Bereich von 90 bis 99,95 Gew.-% des mindestens einen teilkristallinen Polyamids (P) und im Bereich von 0,05 bis 10 Gew.-% des mindestens einen Additivs (A), jeweils bezogen auf die Summe der Gew.-% des mindestens einen teilkristallinen Polyamids (P) und des mindestens einen Additivs (A), bevorzugt bezogen auf das Gesamtgewicht der Schmelze (S).

Bevorzugt enthält die Schmelze (S) im Bereich von 95 bis 99,95 Gew.-% des mindestens einen teilkristallinen Polyamids (P) und im Bereich von 0,05 bis 5 Gew.-% des mindestens einen Additivs (A), jeweils bezogen auf die Summe der Gew.-% des mindestens einen teilkristallinen Polyamids (P) und des mindestens einen Additivs (A), bevorzugt bezogen auf das Gesamtgewicht der Schmelze (S).

Besonders bevorzugt enthält die Schmelze (S) im Bereich von 98 bis 99,95 Gew.-% des mindestens einen teilkristallinen Polyamids (P) und im Bereich von 0,05 bis 2 Gew.-% des mindestens einen Additivs (A), jeweils bezogen auf die Summe der Gew.-% des mindestens einen teilkristallinen Polyamids (P) und des mindestens einen Additivs (A), bevorzugt bezogen auf das Gesamtgewicht der Schmelze (S).

In einer weiteren Ausführungsform enthält die die Schmelze (S) im Bereich von 60 bis < 95 Gew.-% des mindestens einen teilkristallinen Polyamids (P) und im Bereich von > 5 bis 40 Gew.-% des mindestens einen Additivs (A), jeweils bezogen auf die Summe der Gew.-% des mindestens einen teilkristallinen Polyamids (P) und des mindestens einen Additivs (A), bevorzugt bezogen auf das Gesamtgewicht der Schmelze (S).

Es versteht sich von selbst, dass, wenn zusätzlich ein Zusatzstoff compoundiert worden ist, dann auch die Schmelze (S) den Zusatzstoff enthält.

Es versteht sich ebenfalls von selbst, dass, falls die Schmelze (S) mindestens ein Additiv (A) und/oder einen Zusatzstoff enthält, auch die Dispersion (D) das mindestens eine Additiv (A) und/oder den Zusatzstoff enthält. In diesem Fall beziehen sich die Gewichtsprozente des mindestens einen teilkristallinen Polyamids (P) und des Lösungsmittels (LM) auf das Gesamtgewicht des mindestens einen teilkristallinen Polyamids (P), des Lösungsmittels (LM) sowie gegebenenfalls des mindestens einen Additivs (A) und/oder des Zusatzstoffs.

Die Summe der Gewichtsprozente des mindestens einen teilkristallinen Polyamids (P), des Lösungsmittels (LM) sowie gegebenenfalls des mindestens einen Additivs (A) und/oder des Zusatzstoffs ergibt dann üblicherweise 100 Gew.-%.

Schritt a2)

In Schritt a2) wird die in Schritt a1) erhaltene Dispersion (D) kontinuierlich aus der Mischvorrichtung (MV) in eine Verweilvorrichtung (VV) überführt, in der sich das mindestens eine dispergierte teilkristalline Polyamid (P) in dem Lösungsmittel (LM) löst unter Erhalt der Lösung (L).

Unter einer "kontinuierlichen Überführung" der in Schritt a1) erhaltenen Dispersion (D) wird im Rahmen der vorliegenden Erfindung verstanden, dass die entsprechende Überführung über die gesamte Dauer von Schritt a2) erfolgt.

Als Verweilvorrichtung (VV) können alle dem Fachmann bekannten Verweilvorrichtungen verwendet werden. Vorzugsweise werden als Verweilvorrichtung (VV) ein Rohr oder ein kontinuierlich betriebener Rührbehälter verwendet. Wird ein Rohr verwendet, handelt es sich bei dem Rohr vorzugsweise um eine Rohrwendelstrecke.

Gegenstand der vorliegenden Erfindung ist daher auch ein Verfahren, bei dem die Verweilvorrichtung (VV) ein Rohr oder ein kontinuierlich betriebener Rührbehälter ist.

Ist die Verweilvorrichtung (VV) ein Rührbehälter, werden das Lösungsmittel (LM), die Dispersion (D) und die Lösung (L) vorzugsweise in Schritt a2) gerührt. Als Rührer eignen sich alle dem Fachmann bekannten Rührer, beispielsweise Propellerrührer Ankerrührer, Kreuzbalkenrührer, gegebenenfalls mit oder ohne Stromstörer.

Das Lösungsmittel (LM), die Dispersion (D) und die Lösung (L) werden in Schritt a2) bei einer ersten Temperatur (T1) gehalten.

Die erste Temperatur (T1), bei der das Lösungsmittel (LM), die Dispersion (D) und die Lösung (L) in Schritt a2) gehalten werden, ist abhängig von der Art des verwendeten Lösungsmittels (LM), von dem eingesetzten mindestens einen teilkristallinen Polyamid (P) und von der Konzentration des mindestens einen teilkristallinen Polyamids (P) in dem Lösungsmittel (LM).

Beispielsweise werden das Lösungsmittel (LM), die Dispersion (D) und die Lösung (L) in Schritt a2) bei einer ersten Temperatur (T1) gehalten, die im Bereich von 140 bis 250° C liegt, bevorzugt im Bereich von 150 bis 240° C und insbesondere bevorzugt im Bereich von 170 bis 220° C.

Gegenstand der vorliegenden Erfindung ist daher auch ein Verfahren, bei dem die erste Temperatur (T1) im Bereich von 140 bis 250 °C liegt.

Die Temperatur (T1) wird mit Hilfe eines in das Lösungsmittel (LM), die Dispersion (D) und die Lösung (L) eintauchenden Thermometers (PT100) bestimmt und mittels eines Thermostaten konstant gehalten.

Die mittlere Verweildauer des Lösungsmittels (LM), der Dispersion (D) beziehungsweise der Lösung (L) in der Verweilvorrichtung (VV) beträgt vorzugsweise 0,1 bis 10 Stunden, bevorzugt 0,1 bis 5 Stunden.

In der Verweilvorrichtung (VV) löst sich das mindestens eine dispergierte teilkristalline Polyamid (P) in dem Lösungsmittel (LM). Am Ende von Schritt a2) bzw.

vor Beginn von Schritt b) liegt das mindestens eine teilkristalline Polyamid (P) vollständig gelöst in dem Lösungsmittel (LM) vor. Dies bedeutet, dass die Moleküle des mindestens einen teilkristallinen Polyamids (P) homogen und statistisch in dem Lösungsmittel (LM) verteilt sind und dass sich die Moleküle des mindestens einen teilkristallinen Polyamids (P) durch Filtration nicht abtrennen lassen.

In einer Ausführungsform der vorliegenden Erfindung löst sich das mindestens eine dispergierte teilkristalline Polyamid (P) bereits am Ende von Schritt a1) bzw. vor Beginn von Schritt a2) teilweise in dem Lösungsmittel (LM). "Teilweise" bedeutet, dass sich das mindestens eine teilkristalline Polyamid (P) nicht vollständig in dem Lösungsmittel (LM) löst. Vorzugsweise liegt das mindestens eine teilkristalline Polyamid (P) zu höchstens 50 Gew.-%, mehr bevorzugt zu höchstens 40 Gew.-% und insbesondere bevorzugt zu höchstens 25 Gew.-% gelöst in dem Lösungsmittel (LM) vor, bezogen auf das Gesamtgewicht des mindestens einen teilkristallinen Polyamids (P).

Es ist jedoch bevorzugt, dass sich das mindestens eine teilkristalline Polyamid (P) nicht vor Beginn von Schritt a2) in dem Lösungsmittel (LM) löst. Löst sich das mindestens eine teilkristalline Polyamid (P) nicht vor Beginn von Schritt a2) in dem Lösungsmittel (LM), dann liegt das mindestens eine teilkristalline Polyamid (P) dispergiert in dem Lösungsmittel (LM) vor. Das mindestens eine teilkristalline Polyamid (P) bildet dann die disperse Phase (innere Phase), das Lösungsmittel (LM) bildet dann das Dispersionsmedium (äußere Phase).

Enthält die Dispersion (D) zusätzlich mindestens ein Additiv (A), kann sich das mindestens eine Additiv (A) ebenfalls in dem Lösungsmittel (LM) lösen. Darüber hinaus ist es möglich, dass sich das mindestens eine Additiv (A) in dem Lösungsmittel (LM) nicht löst.

Löst sich das mindestens eine Additiv (A) nicht in dem Lösungsmittel (LM), dann liegt das mindestens eine Additiv (A) dispergiert in dem Lösungsmittel (LM), das das mindestens eine teilkristalline Polyamid (P) gelöst enthält, vor. Das mindestens eine Additiv (A) bildet dann die disperse Phase (innere Phase), das Lösungsmittel (LM), das das mindestens eine teilkristalline Polyamid (P) gelöst enthält, bildet dann das Dispersionsmedium (äußere Phase).

Die gegebenenfalls in der Dispersion (D) enthaltenen Zusatzstoffe können ebenfalls in dem Lösungsmittel (LM) gelöst vorliegen. Ebenso ist es möglich, dass sich die Zusatzstoffe nicht in dem Lösungsmittel (LM) lösen und dispergiert in dem Lösungsmittel (LM), das das mindestens eine teilkristalline Polyamid (P) gelöst enthält, vorliegen.

Schritt b)

In Schritt b) wird die in Schritt a) erhaltene Lösung (L) kontinuierlich aus der Verweilvorrichtung (VV) in eine Fällvorrichtung (FV) überführt, wobei die in Schritt a) erhaltene Lösung (L) in der Fällvorrichtung (FV) auf eine zweite Temperatur (T2) abgekühlt wird unter Erhalt einer Suspension (S), die das Polyamidpulver (PP) als suspendierte Phase und das Lösungsmittel (LM) als kontinuierliche Phase enthält.

Unter einer "kontinuierlichen Überführung" der in Schritt a) erhaltenen Lösung (L) wird im Rahmen der vorliegenden Erfindung verstanden, dass die entsprechende Überführung über die gesamte Dauer von Schritt b) erfolgt.

Die zweite Temperatur (T2), auf die die in Schritt a) erhaltene Lösung (L) in Schritt b) abgekühlt wird, ist abhängig von dem verwendeten Lösungsmittel (LM), von dem mindestens einen teilkristallinen Polyamid (P) sowie von der Konzentration des mindestens einen teilkristallinen Polyamids (P) in dem Lösungsmittel (LM).

Beispielsweise wird die in Schritt a) erhaltene Lösung (L) in Schritt b) auf eine zweite Temperatur (T2), die im Bereich von 0 bis kleiner 140 °C liegt, bevorzugt im Bereich von 5 bis kleiner 135 °C und insbesondere bevorzugt im Bereich von 10 bis kleiner 130 °C, abgekühlt.

Gegenstand der vorliegenden Erfindung ist daher auch ein Verfahren, bei dem die zweite Temperatur (T2) im Bereich von 0 bis kleiner 140 °C liegt.

Es versteht sich von selbst, dass die zweite Temperatur (T2), auf die die Lösung (L) in Schritt b) abgekühlt wird, unterhalb der ersten Temperatur (T1) liegt, bei der das Lösungsmittel (LM), die Dispersion (D) und die Lösung (L) in Schritt a1) gehalten werden.

Die Temperatur (T2) wird mit Hilfe eines in die Lösung (L) eintauchenden Thermometers (PT100) bestimmt und mittels eines Thermostaten konstant gehalten.

Die mittlere Verweildauer der Lösung (L) in der Fällvorrichtung (FV) beträgt 0,1 bis 2 Stunden, bevorzugt 0,2 bis 1,5 Stunden und insbesondere bevorzugt 0,3 bis 1 Stunden.

Das Abkühlen kann nach allen dem Fachmann bekannten Methoden erfolgen.

Das Abkühlen der Lösung (L) in Schritt b) kann sowohl in einem als auch in mehreren Schritten erfolgen.

Erfolgt das Abkühlen der Lösung (L) in Schritt b) in einem Schritt, wird Schritt b) üblicherweise in einem einzigen Reaktor unter Erhalt der Suspension (S) durchgeführt. Vorzugsweise erfolgt das Abkühlen der Lösung (L) in Schritt b) jedoch in mehreren Schritten, besonders bevorzugt in zwei Schritten.

Erfolgt das Abkühlen der Lösung (L) in Schritt b) in zwei Schritten, wird in einem ersten Schritt b1) die Lösung (L) auf eine Temperatur (T2a) abgekühlt unter Erhalt einer Suspension (S1) und in einem zweiten Schritt b2) die Suspension (S1) auf eine Temperatur (T2b) abgekühlt unter Erhalt der Suspension (S).

Gegenstand der vorliegenden Erfindung ist daher auch ein Verfahren, bei dem das Abkühlen der Lösung (L) in Schritt b) in zwei Schritten erfolgt, wobei in einem ersten Schritt b1) die Lösung (L) auf eine Temperatur (T2a) abgekühlt wird unter Erhalt einer Suspension (S1) und in einem zweiten Schritt b2) die Suspension (S1) auf eine Temperatur (T2b) abgekühlt wird unter Erhalt der Suspension (S).

Die Temperatur (T2a) liegt dabei vorzugsweise im Bereich von 100 bis kleiner 140 °C, mehr bevorzugt im Bereich von 100 bis kleiner 135 °C und insbesondere bevorzugt im Bereich von 100 bis kleiner 125 °C.

Die Temperatur (T2b) liegt dabei vorzugsweise im Bereich von 0 bis kleiner 100 °C, mehr bevorzugt im Bereich von 5 bis kleiner 100 °C und insbesondere bevorzugt im Bereich von 10 bis kleiner 100 °C.

Gegenstand der vorliegenden Erfindung ist daher auch ein Verfahren, bei dem die Temperatur (T2a) im Bereich von 100 bis kleiner 140 °C liegt.

Weiterhin ist auch ein Verfahren Gegenstand der vorliegenden Erfindung, bei dem die Temperatur (T2b) im Bereich von 0 bis kleiner 100 °C liegt.

Falls das Abkühlen der Lösung (L) in Schritt b) in zwei Schritten erfolgt, wird Schritt b1) vorzugsweise in einem ersten Reaktor (R1) und Schritt b2) vorzugsweise in einem zweiten Reaktor (R2) durchgeführt.

Gegenstand der vorliegenden Erfindung ist daher auch ein Verfahren, bei dem Schritt b1) in einem ersten Reaktor (R1) und Schritt b2) in einem zweiten Reaktor (R2) durchgeführt wird.

Es versteht sich damit von selbst, dass der Begriff "Fällvorrichtung (FV)" im Rahmen der vorliegenden Erfindung sowohl einen als auch mehr als einen Reaktor umfassen kann.

Geeignete Reaktoren, in denen das Abkühlen der Lösung (L) bzw. der Suspension (S1) erfolgen kann, sind beispielsweise kontinuierliche Rührkessel oder rohrförmige Reaktoren. Vorzugsweise werden für das Abkühlen der Lösung (L) in Schritt b) jedoch kontinuierliche Rührkessel eingesetzt.

Beim Abkühlen der in Schritt a) erhaltenen Lösung (L) wird eine Suspension (S) erhalten, die das Polyamidpulver (PP) als suspendierte Phase (innere Phase) und das Lösungsmittel (LM) als kontinuierliche Phase enthält.

Das Polyamidpulver (PP) wird weiter unten näher beschrieben.

Die Suspension (S) enthält üblicherweise im Bereich von 1 bis 25 Gew.-% des Polyamidpulvers (PP) und im Bereich von 75 bis 99 Gew.-% des Lösungsmittels (LM), jeweils bezogen auf das Gesamtgewicht der Suspension (S).

Bevorzugt enthält die Suspension (S) im Bereich von 4 bis 20 Gew.-% des Polyamidpulvers (PP) und im Bereich von 80 bis 96 Gew.-% des Lösungsmittels (LM), bezogen auf das Gesamtgewicht der Suspension (S).

Am meisten bevorzugt enthält die Suspension (S) im Bereich von 7 bis 15 Gew.-% des Polyamidpulvers (PP) und im Bereich von 85 bis 93 Gew.-% des Lösungsmittels (LM), bezogen auf das Gesamtgewicht der Suspension (S).

Es versteht sich von selbst, dass falls die Lösung (L) mindestens ein Additiv (A) und/oder einen Zusatzstoff enthält, auch das Polyamidpulver (PP) das mindestens eine Additiv (A) und/oder den Zusatzstoff enthält.

Schritt c)

In Schritt c) wird das Polyamidpulver (PP) aus der in Schritt b) erhaltenen Suspension (S) abgetrennt.

Das Abtrennen des Polyamidpulvers (PP) kann nach allen dem Fachmann bekannten Verfahren erfolgen, wie beispielsweise durch Filtration und/oder Zentrifugieren. In Schritt c) wird somit das Polyamidpulver (PP) von dem Lösungsmittel (LM) der Suspension (S) abgetrennt.

Das so erhaltene Polyamidpulver (PP) kann gegebenenfalls weiter aufgearbeitet werden. In einer bevorzugten Ausführungsform wird das Polyamidpulver (PP) mit Wasser gewaschen, um gegebenenfalls enthaltene Reste des Lösungsmittels (LM) vom Polyamidpulver (PP) abzutrennen.

In einer weiteren bevorzugten Ausführungsform wird das Polyamidpulver (PP) nach der Abtrennung in Schritt c) mit Wasser gewaschen und nachfolgend getrocknet.

Die Trocknung kann hierbei thermisch erfolgen. Bevorzugte thermische Trocknungsverfahren sind beispielsweise die Trocknung in einer mit Heißluft beaufschlagten Wirbelschicht oder die Trocknung unter Stickstoffatmosphäre und/oder im Vakuum bei erhöhten Temperaturen, beispielsweise im Bereich von 50 bis 80° C.

Gegenstand der vorliegenden Erfindung ist daher auch ein Verfahren, bei dem das Abtrennen des Polyamidpulvers (PP) in Schritt c) durch Filtration und/oder Zentrifugieren und anschließende Trocknung erfolgt.

In einigen Fällen kann es vorteilhaft sein, das Polyamidpulver (PP) nach der Abtrennung in Verfahrensschritt c) zu klassieren. Hierzu kann das Polyamidpulver (PP) einer Siebung und/oder einer Windsichtung unterzogen werden. Mit der Windsichtung werden im Allgemeinen Partikel aus dem Polyamidpulver (PP) abgetrennt, die zu fein sind. Mit der Siebung werden im Allgemeinen Partikel aus dem Polyamidpulver (PP) abgetrennt, deren Partikelgröße zu groß ist. Es ist möglich, nur eine Siebung durchzuführen oder nur eine Windsichtung durchzuführen. Darüber hinaus ist es auch möglich, eine Siebung und nachfolgend eine Windsichtung durchzuführen oder eine Windsichtung und nachfolgend eine Siebung durchzuführen. Es ist darüber hinaus auch möglich, das Polyamidpulver (PP) nach der Abtrennung in Verfahrensschritt c) direkt als Sinterpulver zu verwenden.

Polyamidpulver (PP)

Das erfindungsgemäße Polyamidpulver (PP) enthält mindestens ein teilkristallines Polyamid (P). Das erfindungsgemäße Polyamidpulver (PP) kann das mindestens eine teilkristalline Polyamid (P) in beliebigen Mengen enthalten.

Üblicherweise enthält das Polyamidpulver (PP) das mindestens eine teilkristalline Polyamid (P) in der Menge, in der auch die Schmelze (S) in Schritt a1) das mindestens eine teilkristalline Polyamid (P) enthält.

Besteht die Schmelze (S) vollständig aus dem mindestens einen teilkristallinen Polyamid (P), so besteht auch üblicherweise das erfindungsgemäße Polyamidpulver (PP) vollständig aus dem mindestens einen teilkristallinen Polyamid (P).

"Vollständig" bedeutet im Rahmen der vorliegenden Erfindung, dass das Polyamidpulver (PP) 100 Gew.-% des mindestens einen teilkristallinen Polyamids (P) enthält, bezogen auf das Gesamtgewicht des Polyamidpulvers (PP).

Enthält die Schmelze (S) in Schritt a1) neben dem mindestens einen teilkristallinen Polyamid (P) noch mindestens ein Additiv (A), enthält das Polyamidpulver (PP) üblicherweise auch das mindestens eine teilkristalline Polyamid (P) sowie das mindestens eine Additiv (A). Vorzugsweise enthält das Polyamidpulver (PP) das mindestens eine teilkristalline Polyamid (P) sowie das mindestens eine Additiv (A) in den Mengen, in denen auch die Schmelze (S) das mindestens eine teilkristalline Polyamid (P) sowie das mindestens eine Additiv (A) enthält.

Beispielsweise enthält das Polyamidpulver (PP) im Bereich von 95 bis 99,95 Gew.-% des mindestens einen teilkristallinen Polyamids (P) und im Bereich von 0,05 bis 5 Gew.-% des mindestens einen Additivs (A), bezogen auf das Gesamtgewicht des Polyamidpulvers (PP).

Bevorzugt enthält das Polyamidpulver (PP) im Bereich von 98 bis 99,95 Gew.-% des mindestens einen teilkristallinen Polyamids (P) und im Bereich von 0,05 bis 2 Gew.-% des mindestens einen Additivs (A), bezogen auf das Gesamtgewicht des Polyamidpulvers (PP).

In einer weiteren Ausführungsform enthält das Polyamidpulver (PP) im Bereich von 60 bis < 95 Gew.-% des mindestens einen teilkristallinen Polyamids (P) und im Bereich von > 5 bis 40 Gew.-% des mindestens einen Additivs (A), jeweils bezogen auf das Gesamtgewicht des Polyamidpulvers (PP).

Bevorzugt enthält das Polyamidpulver (PP) in dieser Ausführungsform im Bereich von 95 bis 99,95 Gew.-% des mindestens einen teilkristallinen Polyamids (P) und im Bereich von 0,05 bis 5 Gew.-% des mindestens einen Additivs (A), jeweils bezogen auf das Gesamtgewicht des Polyamidpulvers (PP).

Am meisten bevorzugt enthält das Polyamidpulver (PP) in dieser Ausführungsform im Bereich von 98 bis 99,95 Gew.-% des mindestens einen teilkristallinen Polyamids (P) und im Bereich von 0,05 bis 2 Gew.-% des mindestens einen Additivs (A), jeweils bezogen auf das Gesamtgewicht des Polyamidpulvers (PP).

Es versteht sich von selbst, dass, wenn die Schmelze (S) in Schritt a1) zusätzlich einen Zusatzstoff enthält, dann auch das in Schritt c) erhaltene Polyamidpulver (PP) diesen Zusatzstoff enthält. Üblicherweise enthält das Polyamidpulver (PP) diesen Zusatzstoff dann in den Mengen, in denen auch die Schmelze (S) den Zusatzstoff enthält.

Das Polyamidpulver (PP) kann darüber hinaus noch Reste des Lösungsmittels (LM) enthalten.

Unter "Resten" des Lösungsmittels (LM) werden beispielsweise im Bereich von 0,01 bis 5 Gew.-% des Lösungsmittels (LM), bevorzugt im Bereich von 0,1 bis 3 Gew.-% und insbesondere bevorzugt im Bereich von 0,1 bis 1 Gew.-% des Lösungsmittels (LM) verstanden, jeweils bezogen auf das Gesamtgewicht des Polyamidpulvers (PP).

Wenn das Polyamidpulver (PP) im Bereich von > 5 bis 50 Gew.-% des mindestens einen Additivs (A), bevorzugt im Bereich von 10 bis 40 Gew.-% des mindestens einen Additivs (A) und insbesondere bevorzugt im Bereich von 10 bis 30 Gew.-% des mindestens einen Additivs (A) enthält, jeweils bezogen auf das Gesamtgewicht des Polyamidpulvers (PP), dann ist das Polyamidpulver (PP) ein sogenannter Masterbatch. Ein solcher Masterbatch wird üblicherweise vor der Verwendung, beispielsweise in einem selektiven Lasersinterprozess und/oder zur Herstellung von Formkörpern mit weiterem teilkristallinem Polyamid (P) verdünnt. Derartige Verfahren sind dem Fachmann bekannt.

Enthält das Polyamidpulver ein Additiv (A), liegt in dem Polyamidpulver (PP) das mindestens eine Additiv (A) üblicherweise dispergiert in dem mindestens einen teilkristallinen Polyamid (P) vor. Das mindestens eine Additiv (A) bildet dann die disperse Phase (innere Phase), das mindestens eine teilkristalline Polyamid (P) bildet das Dispersionsmedium (äußere Phase).

Das Polyamidpulver (PP) weist üblicherweise eine Schmelztemperatur ($T_{M(PP)}$) im Bereich von 180 bis 270° C auf. Bevorzugt liegt die Schmelztemperatur ($T_{M(PP)}$) des Polyamidpulvers (PP) im Bereich von 185 bis 260° C und insbesondere bevorzugt im Bereich von 190 bis 245° C.

Die Schmelztemperatur ($T_{M(PP)}$) des Polyamidpulvers (PP) wird im Rahmen der vorliegenden Erfindung bestimmt mittels dynamischer Differenzkalorimetrie (DDK; Differential Scanning Calorimetry, DSC). Es werden üblicherweise ein Heizlauf (H) und ein Kühllauf (K) gemessen. Dabei wird ein DSC-Diagramm, wie es in Figur 1 beispielhaft gezeigt ist, erhalten. Unter der Schmelztemperatur ($T_{M(PP)}$) wird dann die Temperatur verstanden, bei der der Aufschmelzpeak des Heizlaufs (H) des DSC-Diagramms ein Maximum aufweist. Die Schmelztemperatur ($T_{M(PP)}$) ist also von der weiter unten beschriebenen Onset-Temperatur des Aufschmelzens ($T_M^{onset}$) verschieden. Üblicherweise liegt die Schmelztemperatur ($T_{M(PP)}$) oberhalb der Onset-Temperatur des Aufschmelzens ($T_M^{onset}$).

Das Polyamidpulver (PP) weist außerdem üblicherweise eine Kristallisationstemperatur ($T_{C(PP)}$) im Bereich von 120 bis 250 °C auf. Bevorzugt liegt die Kristallisationstemperatur ($T_{C(PP)}$) des Polyamidpulvers (PP) im Bereich von 130 bis 240 °C und insbesondere bevorzugt im Bereich von 140 bis 235 °C.

Die Kristallisationstemperatur ($T_{C(PP)}$) wird im Rahmen der vorliegenden Erfindung ebenfalls mittels dynamischer Differenzkalorimetrie (DDK; Differential Scanning Calorimetry, DSC) bestimmt. Dabei werden, wie vorstehend beschrieben, üblicherweise ein Heizlauf (H) und ein Kühllauf (K) gemessen. Es wird ein DSC-Diagramm, wie es in Figur 1 beispielhaft gezeigt ist, erhalten. Die Kristallisationstemperatur ($T_{C(PP)}$) ist dann die Temperatur am Minimum des Kristallisationspeaks der DSC-Kurve. Die Kristallisationstemperatur ($T_{C(PP)}$) ist also von der weiter unten beschriebenen Onset-Temperatur der Kristallisation ($T_C^{onset}$).

Das Polyamidpulver (PP) weist außerdem üblicherweise eine Glasübergangstemperatur ($T_{G(P)}$) auf. Die Glasübergangstemperatur ($T_{G(PP)}$) des Polyamidpulvers (PP) liegt üblicherweise im Bereich von 0 bis 110 °C, bevorzugt im Bereich von 40 bis 105 °C und insbesondere bevorzugt im Bereich von 40 bis 105 °C.

Die Glasübergangstemperatur ($T_{G(PP)}$) des Polyamidpulvers (PP) wird mittels dynamischer Differenzkalorimetrie bestimmt. Zur Bestimmung werden erfindungsgemäß zunächst ein erster Heizlauf (H1), dann ein Kühllauf (K) und anschließend ein zweiter Heizlauf (H2) einer Probe des Polyamidpulvers (PP) (Einwaage ca. 8,5 g) gemessen. Die Heizrate beim ersten Heizlauf (H1) und beim zweiten Heizlauf (H2) beträgt 20 K/min, die Kühlrate beim Kühllauf (K) beträgt ebenfalls 20 K/min. Im Bereich des Glasübergangs des Polyamidpulvers (PP) wird im zweiten Heizlauf (H2) des DSC-Diagramms eine Stufe erhalten. Die Glasübergangstemperatur ($T_{G(PP)}$) des Polyamidpulvers (PP) entspricht der Temperatur bei halber Stufenhöhe im DSC-Diagramm. Dieses Verfahren zur Bestimmung der Glasübergangstemperatur ist dem Fachmann bekannt.

Das Polyamidpulver (PP) weist außerdem üblicherweise ein Sinterfenster ($W_{PP}$) auf. Das Sinterfenster ($W_{PP}$) ist, wie nachfolgend näher ausgeführt, die Differenz zwischen der Onset-Temperatur des Aufschmelzens ($T_M^{onset}$) und der Onset-Temperatur der Kristallisation ($T_C^{onset}$). Die Onset-Temperatur des Aufschmelzens ($T_M^{onset}$) und die Onset-Temperatur der Kristallisation ($T_C^{onset}$) werden wie nachfolgend beschrieben bestimmt.

Das Sinterfenster ($W_{PP}$) des Polyamidpulvers (PP) liegt vorzugsweise im Bereich von 15 bis 40 K (Kelvin), besonders bevorzugt im Bereich von 20 bis 35 K und insbesondere bevorzugt im Bereich von 20 bis 30 K.

Gegenstand der vorliegenden Erfindung ist daher auch ein Polyamidpulver (PP), erhältlich nach dem erfindungsgemäßen Verfahren.

Aufgrund der vorstehend beschriebenen Eigenschaften des Polyamidpulvers (PP) eignet sich das erfindungsgemäße Polyamidpulver (PP) besonders gut als Sinterpulver (SP).

Gegenstand der vorliegenden Erfindung ist daher auch die Verwendung eines erfindungsgemäßen Polyamidpulvers (PP) als Sinterpulver (SP).

Gegenstand der vorliegenden Erfindung ist weiterhin ein Verfahren zur Herstellung eines Formkörpers durch Belichten einer Schicht eines erfindungsgemäßen Polyamidpulvers (PP).

Belichten

Beim Belichten schmilzt zumindest ein Teil der Schicht des Polyamidpulvers (PP) auf. Das aufgeschmolzene Polyamidpulver (PP) fließt ineinander und bildet eine homogene Schmelze. Nach dem Belichten kühlt der aufgeschmolzene Teil der Schicht des Polyamidpulvers (PP) wieder ab und die homogene Schmelze erstarrt wieder.

Zur Belichtung eignen sich alle dem Fachmann bekannten Methoden. Bevorzugt erfolgt das Belichten mit einer Strahlungsquelle. Die Strahlungsquelle ist bevorzugt ausgewählt aus der Gruppe bestehend aus Infrarotstrahlern und Lasern. Als Infrarotstrahler sind Nahinfrarot-Strahler insbesondere bevorzugt.

Geeignete Laser sind dem Fachmann bekannt und beispielsweise Faserlaser, Nd:YAG Laser (Neodym-dotierter Yttrium-Aluminium-Granat-Laser) oder Kohlendioxidlaser.

Wird als Strahlungsquelle beim Belichten ein Laser eingesetzt, so wird üblicherweise die Schicht des Polyamidpulvers (PP) mit dem Laserstrahl lokal und kurzzeitig belichtet. Dabei werden nur die Teile des Polyamidpulvers (PP), die vom Laserstrahl belichtet worden sind, selektiv aufgeschmolzen. Wird ein Laser eingesetzt, wird das Verfahren als selektives Lasersintern bezeichnet. Das selektive Lasersintern ist dem Fachmann als solches bekannt.

Wird als Strahlungsquelle beim Belichten ein Infrarot-Strahler, insbesondere ein Nahinfrarot-Strahler eingesetzt, so liegt die Wellenlänge, mit der die Strahlungsquelle strahlt, üblicherweise im Bereich von 780 nm bis 1000 μm, bevorzugt im Bereich von 780 nm bis 50 μm und insbesondere im Bereich von 780 nm bis 2,5 μm.

Beim Belichten wird dann üblicherweise die gesamte Schicht des Polyamidpulvers (PP) belichtet. Damit beim Belichten nur die gewünschten Bereiche des Polyamidpulvers (PP) aufschmelzen, wird üblicherweise eine Infrarot-absorbierende Tinte (IR-absorbierende Tinte) auf die Bereiche aufgebracht, die aufschmelzen sollen. Als IR-absorbierende Tinten eignen sich alle dem Fachmann bekannten IR-absorbierenden Tinten, insbesondere dem Fachmann bekannte IR-absorbierende Tinte für das High Speed Sintern.

IR-absorbierende Tinten enthalten üblicherweise zumindest einen Absorber, der IR-Strahlung, bevorzugt NIR-Strahlung (Nahinfrarot Strahlung) absorbiert. Beim Belichten der Schicht des Polyamidpulvers (PP) wird durch die Absorption der IR-Strahlung, bevorzugt der NIR-Strahlung, durch den in der IR-absorbierenden Tinten enthaltenen IR-Absorber der Teil der Schicht des Polyamidpulvers (PP), auf den die IR-absorbierende Tinte aufgebracht worden ist, selektiv erwärmt.

Die IR-absorbierende Tinte kann neben dem zumindest einen Absorber eine Trägerflüssigkeit enthalten. Geeignete Trägerflüssigkeiten sind dem Fachmann bekannt und beispielsweise Öle oder Lösungsmittel.

Der zumindest eine Absorber eine Absorber kann in der Trägerflüssigkeit gelöst oder dispergiert vorliegen.

Erfolgt die Belichtung mit einer Strahlungsquelle, die ausgewählt ist aus InfrarotStrahlern und wird eine IR-absorbierende Tinte aufgebracht, dann wird das Verfahren auch als *High-Speed Sintering (HSS)* oder *Multijet-Fusion-Verfahren (MJF)* bezeichnet. Diese Verfahren sind dem Fachmann als solche bekannt.

Im Anschluss an die Belichtung wird die Schicht des Polyamidpulvers (PP) üblicherweise um die Schichtdicke der bereitgestellten Schicht des Polyamidpulvers (PP) abgesenkt und eine weitere Schicht des Polyamidpulvers (PP) aufgebracht. Diese wird anschließend erneut belichtet.

Dadurch verbindet sich zum Einen die obere Schicht des Polyamidpulvers (PP) mit der unteren Schicht des Polyamidpulvers (PP), außerdem verbinden sich die Partikel des Polyamidpulvers (PP) innerhalb der oberen Schicht durch Aufschmelzen miteinander.

Das Belichten kann also wiederholt werden.

Indem das Absenken des Pulverbetts, das Aufbringen des Polyamidpulvers (PP) und das Belichten und damit das Aufschmelzen des Polyamidpulvers (PP) wiederholt werden, werden dreidimensionale Formkörper hergestellt. Es ist möglich, Formkörper herzustellen, die beispielsweise auch Hohlräume aufweisen. Ein zusätzliches Stützmaterial ist nicht notwendig, da das nicht aufgeschmolzene Polyamidpulver (PP) selbst als Stützmaterial fungiert.

Bei dem Verfahren von besonderer Bedeutung ist der Schmelzbereich des Polyamidpulvers (PP), das sogenannte Sinterfenster (WSP) des Polyamidpulvers (PP).

Das Sinterfenster (WSP) des Polyamidpulvers (PP) kann beispielsweise durch dynamische Differenzkalorimetrie (DDK; Differential Scanning Calorimetry, DSC) bestimmt werden.

Bei der dynamischen Differenzkalorimetrie werden die Temperatur einer Probe, im vorliegenden Fall also einer Probe des Polyamidpulvers (PP), und die Temperatur einer Referenz linear mit der Zeit geändert. Dazu wird der Probe und der Referenz Wärme zugeführt bzw. aus diesen abgeführt. Es wird die Wärmemenge Q bestimmt, die notwendig ist, um die Probe auf der gleichen Temperatur wie die Referenz zu halten. Als Referenzwert dient die der Referenz zugeführte bzw. abgeführte Wärmemenge QR.

Geht die Probe eine endotherme Phasenumwandlung ein, so muss eine zusätzliche Wärmemenge Q zugeführt werden, um die Probe auf der gleichen Temperatur wie die Referenz zu halten. Findet eine exotherme Phasenumwandlung statt, so muss eine Wärmemenge Q abgeführt werden, um die Probe auf der gleichen Temperatur wie die Referenz zu halten. Die Messung liefert ein DSC-Diagramm, in dem die Wärmemenge Q, die der Probe zugeführt bzw. aus dieser abgeführt wird, in Abhängigkeit von der Temperatur T aufgetragen wird.

Üblicherweise wird bei der Messung zunächst ein Heizlauf (H) durchgeführt, das heißt, die Probe und die Referenz werden linear erwärmt. Während des Schmelzens der Probe (Phasenumwandlung fest/flüssig), muss eine zusätzliche Wärmemenge Q zugeführt werden, um die Probe auf der gleichen Temperatur wie die Referenz zu halten. Im DSC-Diagramm wird dann ein Peak beobachtet, der sogenannte Aufschmelzpeak.

Im Anschluss an den Heizlauf (H) wird üblicherweise ein Kühllauf (K) gemessen. Dabei werden die Probe und die Referenz linear abgekühlt, es wird also Wärme aus der Probe und der Referenz abgeführt. Während der Kristallisation bzw. Erstarrung der Probe (Phasenumwandlung flüssig/fest) muss eine größere Wärmemenge Q abgeführt werden, um die Probe auf der gleichen Temperatur wie die Referenz zu halten, da bei der Kristallisation bzw. dem Erstarren Wärme frei wird. In dem DSC Diagramm des Kühllaufs (K) wird dann ein Peak, der sogenannte Kristallisationspeak, in entgegengesetzter Richtung zu dem Aufschmelzpeak beobachtet.

Im Rahmen der vorliegenden Erfindung erfolgt das Erwärmen während des Heizlaufs üblicherweise mit einer Heizrate von 20 K/min. Das Abkühlen während des Kühllaufs erfolgt im Rahmen der vorliegenden Erfindung üblicherweise mit einer Kühlrate von 20 K/min.

Ein DSC-Diagramm mit einem Heizlauf (H) und einem Kühllauf (K) ist exemplarisch in Figur 1 dargestellt. Anhand des DSC-Diagramms können die Onset Temperatur des Aufschmelzens ($T_M^{onset}$) und die Onset-Temperatur der Kristallisation ($T_C^{onset}$) bestimmt werden.

Zur Bestimmung der Onset-Temperatur des Aufschmelzens ($T_M^{onset}$) wird eine Tangente an die Basislinie des Heizlaufs (H), die bei den Temperaturen unterhalb des Aufschmelzpeaks verläuft, angelegt. Eine zweite Tangente wird an den ersten Wendepunkt des Aufschmelzpeaks angelegt, der bei Temperaturen unterhalb der Temperatur am Maximum des Aufschmelzpeaks liegt. Die beiden Tangenten werden so weit extrapoliert, dass sie sich schneiden. Die senkrechte Extrapolation des Schnittpunkts auf die Temperaturachse gibt die Onset-Temperatur des Aufschmelzens ($T_M^{onset}$) an.

Zur Bestimmung der Onset-Temperatur der Kristallisation ($T_C^{onset}$) wird eine Tangente an die Basislinie des Kühllaufs (K), die bei den Temperaturen oberhalb des Kristallisationspeaks verläuft, angelegt. Eine zweite Tangente wird an den Wendepunkt des Kristallisationspeaks angelegt, der bei Temperaturen oberhalb der Temperatur am Minimum des Kristallisationspeaks liegt. Die beiden Tangenten werden so weit extrapoliert, dass sie sich schneiden. Die senkrechte Extrapolation des Schnittpunkts auf die Temperaturachse gibt die Onset-Temperatur der Kristallisation ($T_C^{onset}$) an.

Das Sinterfenster (W) ergibt sich aus der Differenz zwischen der Onset-Temperatur des Aufschmelzens ($T_M^{onset}$) und der Onset-Temperatur der Kristallisation ($T_C^{onset}$). Es gilt also:

$$W = T_M^{onset} - T_C^{onset} .$$

Im Rahmen der vorliegenden Erfindung haben die Begriffe "Sinterfenster (WSP)", "Größe des Sinterfensters (WSP)" und "Differenz zwischen der Onset-Temperatur des Aufschmelzens ($T_M^{onset}$) und der Onset-Temperatur der Kristallisation ($T_C^{onset}$)" die gleiche Bedeutung und werden synonym gebraucht.

Die vorliegende Erfindung wird durch die nachfolgenden Beispiele näher erläutert, ohne sie jedoch hierauf zu beschränken.

*Schritt a)*

Es wurde eine Lösung (L) hergestellt, die Polyamid 6 (Ultramid B27, BASF SE, Ludwigshafen) gelöst in einem Lösungsmittel (LM) enthält, wobei das Lösungsmittel (LM) ein Gemisch aus Caprolactam in Wasser (Caprolactamgehalt 42 Gew.-%) ist.

*Schritt a1)*

Zunächst wurde eine Schmelze (S) des Polyamid 6 mit dem Lösungsmittel (LM) in einer dynamischen Mischvorrichtung (MV) (Durchlaufmischer DLM/S-007, Firma INDAG, D-25376 Borsfleth) unter Erhalt einer Dispersion (D) gemischt. Dabei wurde die Schmelze (S) und das Lösungsmittel (LM) der dynamischen Mischvorrichtung (MV) jeweils kontinuierlich aus einem Extruder (Collin Single Screw E16T, Dr. Collin GmbH, D-85560 Ebersberg) und aus einem Vorlagebehälter mit Hilfe einer Drei-KolbenMembranpumpe der Firma LEWA GmbH, D-71229 Leonberg zugeführt. Das Polyamid 6 wurde vorher dem Extruder als Granulat mit einem Durchsatz von 450 g/h zugeführt und dann im Extruder unter Erhalt der Schmelze (S) aufgeschmolzen. Die Schmelze (S) weist eine Temperatur von 230 °C auf. Das Lösungsmittel (LM) wird mit Hilfe eines Wärmetauschers bei einem Durchsatz von 4500 g/h in die Mischvorrichtung (MV) gepumpt und weist eine Temperatur zwischen 170 und 180 °C auf.

*Schritt a2)*

Danach wird die in Schritt a1) erhaltene Dispersion (D) aus der dynamischen Mischvorrichtung (MV) kontinuierlich in eine Verweilvorrichtung (W) (Rohrwendelstrecke, Volumen 2,5 Liter) überführt, in der sich das dispergierte Polyamid 6 in dem Lösungsmittel (LM) unter Erhalt der Lösung (L) löst. Dabei werden das Lösungsmittel (LM), die Dispersion (D) und die Lösung (L) bei einer Temperatur von 175 °C gehalten.

*Schritt b)*

Die in Schritt a) erhaltene Lösung (L) wurde kontinuierlich aus der Verweilvorrichtung (W) in eine Fällvorrichtung (FV) überführt, wobei die in Schritt a) erhaltene Lösung (L) in der Fällvorrichtung (FV) abgekühlt wurde unter Erhalt einer Suspension (S), die das Polyamidpulver (PP) als suspendierte Phase und das Lösungsmittel (LM) als kontinuierliche Phase enthält. Als Fällvorrichtung (FV) wurden zwei kontinuierlich betriebene Rührkessel eingesetzt, wobei das Abkühlen in zwei Schritten erfolgte. Im ersten Rührkessel (Volumen 2,4 Liter) wurde die Lösung (L) auf eine Temperatur von 115 °C abgekühlt unter Erhalt einer Suspension (S1), im zweiten Rührkessel (Volumen 6,4 Liter) wurde die Suspension (S1) auf eine Temperatur von < 50 °C abgekühlt unter Erhalt der Suspension (S).

*Schritt c)*

Das Polyamidpulver (PP) wird aus der in Schritt b) erhaltenen Suspension (S) durch Filtration, Waschung und Trocknung abgetrennt.

Das erfindungsgemäße Polyamidpulver (PP) weist beispielsweise folgende Partikelgrößenverteilung auf:

> D10-Wert von 8,4 $\mu$m
> D50-Wert von 36 $\mu$m
> D90-Wert von 95 $\mu$m

Unter dem "D10-Wert" wird im Rahmen der vorliegenden Erfindung die Partikelgröße verstanden, bei der 10 Vol.-% der Partikel, bezogen auf das Gesamtvolumen der Partikel, kleiner oder gleich dem D10-Wert sind und 90 Vol.-% der Partikel, bezogen auf das Gesamtvolumen der Partikel, größer als der D10-Wert sind. In Analogie dazu wird unter dem "D50-Wert" die Partikelgröße verstanden, bei der 50 Vol.-% der Partikel, bezogen auf das Gesamtvolumen der Partikel, kleiner oder gleich dem D50-Wert sind und 50 Vol.-% der Partikel, bezogen auf das Gesamtvolumen der Partikel, größer als der D50-Wert sind. Entsprechend wird unter dem "D90-Wert" die Partikelgröße verstanden, bei der 90 Vol.-% der Partikel, bezogen auf das Gesamtvolumen der Partikel, kleiner oder gleich dem D90-Wert sind und 10 Vol.-% der Partikel, bezogen auf das Gesamtvolumen der Partikel, größer als der D90-Wert sind.

Zur Ermittlung der Partikelgrößen wird das Polyamidpulver (PP) trocken mittels Druckluft oder in einem Lösungsmittel, wie beispielsweise Wasser oder Ethanol, suspendiert und diese Suspension vermessen. Die Bestimmung des D10-, D50- und D90-Werts erfolgt mittels Laserbeugung unter Verwendung eines Mastersizers 3000 der Firma Malvern. Die Auswertung erfolgt mittels Fraunhofer-Beugung.

**Patentansprüche**

1. Verfahren zur kontinuierlichen Herstellung eines Polyamidpulvers (PP), das mindestens ein teilkristallines Polyamid (P) enthält, umfassend die Schritte

   a) Herstellen einer Lösung (L), die das mindestens eine teilkristalline Polyamid (P) gelöst in einem Lösungsmittel (LM) enthält, wobei als Lösungsmittel (LM) eine Mischung verwendet wird, die im Bereich von 30 bis 60 Gew.-% Lactam und im Bereich von 40 bis 70 Gew.-% Wasser enthält, bezogen auf das Gesamtgewicht der Mischung, umfassend die Schritte

   a1) Mischen einer Schmelze (S), die das mindestens eine teilkristalline Polyamid (P) in geschmolzener Form enthält, mit dem Lösungsmittel (LM) in einer Mischvorrichtung (MV) unter Erhalt einer Dispersion (D), die das mindestens eine teilkristalline Polyamid (P) dispergiert in dem Lösungsmittel (LM) enthält, wobei die Schmelze (S) und das Lösungsmittel (LM) der Mischvorrichtung (MV) kontinuierlich zugeführt werden,
   a2) Kontinuierliche Überführung der in Schritt a1) erhaltenen Dispersion (D) aus der Mischvorrichtung (MV) in eine Verweilvorrichtung (W), in der sich das mindestens eine dispergierte teilkristalline Polyamid (P) in dem Lösungsmittel (LM) löst unter Erhalt der Lösung (L),

   wobei das Lösungsmittel (LM), die Dispersion (D) und die Lösung (L) in Schritt a2) bei einer ersten Temperatur (T1) gehalten werden,
   b) Kontinuierliches Überführen der in Schritt a) erhaltenen Lösung (L) aus der Verweilvorrichtung (VV) in eine Fällvorrichtung (FV), wobei die in Schritt a) erhaltene Lösung (L) in der Fällvorrichtung (FV) auf eine zweite Temperatur (T2) abgekühlt wird unter Erhalt einer Suspension (S), die das Polyamidpulver (PP) als suspendierte Phase und das Lösungsmittel (LM) als kontinuierliche Phase enthält,
   c) Abtrennen des Polyamidpulvers (PP) aus der in Schritt b) erhaltenen Suspension (S).

2. Verfahren gemäß Anspruch 1, **dadurch gekennzeichnet, dass** die erste Temperatur (T1) im Bereich von 140 bis 250 °C liegt.

3. Verfahren gemäß Anspruch 1 oder 2, **dadurch gekennzeichnet, dass** die zweite Temperatur (T2) im Bereich von 0 bis kleiner 140 °C liegt.

4. Verfahren gemäß einem der Ansprüche 1 bis 3, **dadurch gekennzeichnet, dass** das Abkühlen der Lösung (L) in Schritt b) in zwei Schritten erfolgt, wobei in einem ersten Schritt b1) die Lösung (L) auf eine Temperatur (T2a) abgekühlt wird unter Erhalt einer Suspension (S1) und in einem zweiten Schritt b2) die Suspension (S1) auf eine Temperatur (T2b) abgekühlt wird unter Erhalt der Suspension (S).

5. Verfahren gemäß Anspruch 4, **dadurch gekennzeichnet, dass** Schritt b1) in einem ersten Reaktor (R1) und Schritt b2) in einem zweiten Reaktor (R2) durchgeführt wird.

6. Verfahren gemäß Anspruch 4, **dadurch gekennzeichnet, dass** die Temperatur (T2a) im Bereich von 100 bis kleiner 140 °C liegt.

7. Verfahren gemäß Anspruch 4, **dadurch gekennzeichnet, dass** die Temperatur (T2b) im Bereich von 0 bis kleiner 100 °C liegt.

8. Verfahren gemäß einem der Ansprüche 1 bis 7, **dadurch gekennzeichnet, dass** die Schmelze (S) eine Temperatur (T3) im Bereich von 200 bis 250 °C aufweist.

9. Verfahren gemäß einem der Ansprüche 1 bis 8, **dadurch gekennzeichnet, dass** das mindestens eine teilkristalline Polyamid (P) ausgewählt ist aus der Gruppe bestehend aus PA 4, PA 6, PA 7, PA 8, PA 9, PA 11, PA 12, PA 46, PA 66, PA 69, PA 610, PA 612, PA 613, PA 1212, PA 1313, PA 6T, PA MXD6, PA 6/6T, PA 6/6I, PA 6/6I6T, PA 6.36, PA 6/66, PA 6/12, PA 66/6/610, PA PACM12, PA 6I/6T/PACM und Copolyamiden aus zwei oder mehreren der vorstehend genannten Polyamide.

10. Verfahren gemäß einem der Ansprüche 1 bis 9, **dadurch gekennzeichnet, dass** die in Schritt a1) erhaltene Dispersion (D) im Bereich von 1 bis 25 Gew.% des mindestens einen teilkristallinen Polyamids (P) und im Bereich von 75 bis 99 Gew.-% des Lösungsmittels (LM) enthält, bezogen auf das Gesamtgewicht der Dispersion (D).

11. Verfahren gemäß einem der Ansprüche 1 bis 10, **dadurch gekennzeichnet, dass** die Verweilvorrichtung (VV) ein Rohr oder ein kontinuierlich betriebener Rührbehälter ist.

12. Verfahren gemäß einem der Ansprüche 1 bis 11, **dadurch gekennzeichnet, dass** das Abtrennen des Polyamidpulvers (PP) in Schritt c) durch Filtration und/oder Zentrifugieren und anschließende Trocknung erfolgt.

13. Polyamidpulver (PP) erhältlich nach einem Verfahren gemäß einem der Ansprüche 1 bis 12.

14. Verwendung eines Polyamidpulvers (PP) gemäß Anspruch 13 als Sinterpulver (SP).

15. Verfahren zur Herstellung eines Formkörpers durch Belichten einer Schicht eines Polyamidpulvers (PP) gemäß Anspruch 13.

Figur 1

**Europäisches Patentamt**
**European Patent Office**
**Office européen des brevets**

# EUROPÄISCHER RECHERCHENBERICHT

Nummer der Anmeldung

EP 18 18 2721

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2018/115767 A1 (SETUP PERFORMANCE [FR]) 28. Juni 2018 (2018-06-28) | 13-15 | INV. C08J3/14 B29C67/04 C08L77/02 B29C64/153 |
| A | * Seite 10, Zeile 6 - Seite 11, Zeile 4; Ansprüche * <br> * Seite 19, Zeilen 21-25 * | 1-12 | |
| | ----- | | |
| X | US 5 648 450 A (DICKENS JR ELMER DOUGLAS [US] ET AL) 15. Juli 1997 (1997-07-15) | 13-15 | |
| A | * Spalte 4, Zeilen 24-41 * <br> * Spalte 6, Zeile 65 - Spalte 7, Zeile 10 * <br> * Spalte 7, Zeilen 30-31 * <br> * Spalte 8, Zeilen 28-29 * <br> * Spalte 8, Zeile 61 - Spalte 9, Zeile 10 * <br> * Spalte 9, Zeilen 41-46 * <br> * Spalte 15, Zeile 65 - Spalte 16, Zeile 50 * <br> * Spalte 19, Zeilen 17-30; Ansprüche; Tabelle 2 * | 1-12 | |
| | ----- | | **RECHERCHIERTE SACHGEBIETE (IPC)** |
| X | WO 2017/140795 A1 (BASF SE [DE]) 24. August 2017 (2017-08-24) | 13-15 | C08J C09J B29C C08L |
| A | * Seite 10, Zeile 6 - Seite 11, Zeile 4; Ansprüche * <br> * Seite 19, Zeilen 21-25 * | 1-12 | |
| | ----- | | |
| E | WO 2018/141631 A1 (BASF SE [DE]) 9. August 2018 (2018-08-09) <br> * Seite 6, Zeilen 20-41; Ansprüche * <br> * Seite 29, Zeile 36 - Seite 30, Zeile 4; Ansprüche; Abbildung 1; Tabelle 1 * | 13-15 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 20. Dezember 2018 | Frison, Céline |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**EP 3 594 272 A1**

Europäisches Patentamt
European Patent Office
Office européen des brevets

# EUROPÄISCHER RECHERCHENBERICHT

Nummer der Anmeldung

EP 18 18 2721

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | VERBELEN LEANDER ET AL: "Characterization of polyamide powders for determination of laser sintering processability", EUROPEAN POLYMER JOURNAL, PERGAMON PRESS LTD. OXFORD, GB, Bd. 75, 21. Dezember 2015 (2015-12-21), Seiten 163-174, XP029398871, ISSN: 0014-3057, DOI: 10.1016/J.EURPOLYMJ.2015.12.014 * das ganze Dokument * ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 20. Dezember 2018 | Frison, Céline |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Seite 2 von 2

## ANHANG ZUM EUROPÄISCHEN RECHERCHENBERICHT
## ÜBER DIE EUROPÄISCHE PATENTANMELDUNG NR.

EP 18 18 2721

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-2018

| Im Recherchenbericht angeführtes Patentdokument | Datum der Veröffentlichung | Mitglied(er) der Patentfamilie | Datum der Veröffentlichung |
|---|---|---|---|
| WO 2018115767 A1 | 28-06-2018 | FR 3061182 A1<br>WO 2018115767 A1 | 29-06-2018<br>28-06-2018 |
| US 5648450 A | 15-07-1997 | US 5648450 A<br>US 6136948 A | 15-07-1997<br>24-10-2000 |
| WO 2017140795 A1 | 24-08-2017 | AU 2017221117 A1<br>CA 3012792 A1<br>CN 108698316 A<br>EP 3416808 A1<br>KR 20180109934 A<br>SG 11201806026U A<br>WO 2017140795 A1 | 06-09-2018<br>24-08-2017<br>23-10-2018<br>26-12-2018<br>08-10-2018<br>27-09-2018<br>24-08-2017 |
| WO 2018141631 A1 | 09-08-2018 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6136948 A
- WO 9606881 A